# EUROPÄISCHE PATENTSCHRIFT

(11) **EP 3 824 228 B1**
(45) Veröffentlichungstag und Bekanntmachung des Hinweises auf die Patenterteilung: **15.11.2023**
(21) Anmeldenummer: 20716708.1
(22) Anmeldetag: 24.03.2020
(51) Int. Cl.: F24H 7/04, F28D 20/00

(54) **WÄRMESPEICHERVORRICHTUNG UND VERFAHREN ZUM SPEICHERN UND/ODER ÜBERTRAGEN VON WÄRME**
HEAT ACCUMULATOR APPARATUS AND METHOD FOR STORING AND/OR TRANSFERRING HEAT
SYSTÈME ACCUMULATEUR DE CHALEUR ET PROCÉDÉ POUR ACCUMULER ET/OU TRANSFÉRER DE LA CHALEUR

(30) Priorität: 29.05.2019 DE 102019207967
(43) Veröffentlichungstag der Anmeldung: 26.05.2021
(73) Patentinhaber: Deutsches Zentrum für Luft- und Raumfahrt e.V., 51147 Köln (DE)
(72) Erfinder: BELIK, Sergej, 70193 Stuttgart (DE)
(74) Vertreter: DTS Patent- und Rechtsanwälte Schnekenbühl und Partner mbB
(86) Internationale Anmeldenummer: PCT/EP2020/058121
(87) Internationale Veröffentlichungsnummer: WO 2020/239288

(56) Entgegenhaltungen:
- DE-A1- 2 117 103
- DE-A1-102012 019 791
- DE-A1-102015 111 235
- DE-A1-102016 119 668
- US-A- 3 596 034

## Beschreibung

Die vorliegende Erfindung betrifft eine Wärmespeichervorrichtung und ein Verfahren zum Speichern und/oder Übertragen von Wärme. Wärmespeichervorrichtungen sind aus der DE 10 2011 109 779 A1, der DE 21 17 103 A, US3596034A und der EP 2 574 756 A1 bekannt.

Der vorliegenden Erfindung liegt die Aufgabe zugrunde, eine Wärmespeichervorrichtung bereitzustellen, welche eine erhöhte Speicher- und/oder Leistungsdichte aufweist und welche flexibel einsetzbar ist.

Diese Aufgabe wird erfindungsgemäß durch eine Wärmespeichervorrichtung gemäß Anspruch 1 und Verfahren gemäß Anspruch 15 gelöst.

Die Induktorvorrichtung umgibt den Speicherraum. Die Induktorvorrichtung umfasst vorzugsweise ein oder mehrere Induktorelemente, welche in einer parallel zur Induktorachse angeordneten Richtung eine variierende Materialstärke aufweisen.

Die Materialstärke ist jeweils senkrecht zu der Induktorachse genommen.

Ein Mittelbereich des einen oder der mehreren Induktorelemente weist im Vergleich zu Bereichen des jeweiligen Induktorelements, welche zu beiden Seiten des Mittelbereichs angeordnet sind, eine verringerte Materialstärke auf.

Die Materialstärke ist vorzugsweise in einer axialen Richtung der Induktorachse in dem Mittelbereich kleiner als in Bereichen, welche zu beiden Seiten des Mittelbereichs angeordnet sind.

Mittels der Induktorvorrichtung ist das in dem Speicherraum aufgenommene Speichermaterial vorzugsweise induktiv erwärmbar. Insbesondere ist das Speichermaterial elektrisch leitfähig.

Die induktive Erwärmung ermöglicht insbesondere eine berührungsfreie und/oder kontaktfreie Erwärmung des Speichermaterials. Durch die berührungsfreie und/oder kontaktfreie Erwärmung sind insbesondere im Vergleich zu einer Kontaktheizung erhöhte Leistungsdichten bei einer Wärmeerzeugung ausbildbar.

Durch den Speicherraum geführtes Fluid ist vorzugsweise durch das erwärmte Speichermaterial auf Temperaturen von 1000°C oder mehr, insbesondere von 1200°C oder mehr, erwärmbar und/oder wird erwärmt.

Die Induktorachse ist vorzugsweise parallel zu einer Längsmittelachse eines Gehäuses, welche den Speicherraum umgibt, angeordnet.

Das eine oder die mehreren Induktorelemente sind vorzugsweise gewölbt ausgebildet.

Es kann vorgesehen sein, dass sich ein Induktorelement im Wesentlichen über eine gesamte Gehäusewandung des Gehäuses, welches den Speicherraum umgibt, erstreckt.

In Ausführungsformen mit mehreren Induktorelementen sind deren Induktorachsen vorzugsweise identisch.

Die mehreren Induktorelemente sind vorzugsweise längs einer axialen Richtung der Induktorachse aneinandergereiht.

Günstig kann es sein, wenn die Induktorelemente über eine Stromverteilungsschiene, insbesondere elektrisch leitend, miteinander verbunden sind.

Die mehreren Induktorelemente sind vorzugsweise jeweils großflächige Induktorelemente.

Im Fall von mehreren Induktorelementen kann eine Beaufschlagung mit einer Wechselspannung mit einer Frequenz von ca. 10 kHz bis ca. 500 kHz, insbesondere von ca. 100 kHz bis ca. 500 kHz, für eine induktive Erwärmung des Speichermaterials ausreichend sein.

Es kann vorteilhaft sein, wenn Induktorelemente in einer Parallelschaltung miteinander gekoppelt sind. Eine Frequenz zur Beaufschlagung der parallel gekoppelten Induktorelemente mit einer Wechselspannung liegt vorzugsweise bei ca. 100 kHz oder mehr, insbesondere in einem Bereich von ca. 500 kHz bis ca. 1,0 MHz.

Alternativ ist auch eine serielle Kopplung der Induktorelemente möglich. Seriell gekoppelte Induktorelemente werden vorzugsweise mit einer Wechselspannung mit einer Frequenz von ca. 10 kHz oder mehr, insbesondere von ca. 100 kHz oder mehr, beaufschlagt.

Im Falle von exakt einem Induktorelement wird dieses vorzugsweise mit einer Wechselspannung in einem Bereich von ca. 200 kHz bis ca. 1000 kHz beaufschlagt.

Günstig kann es sein, wenn die Materialstärke des einen oder der mehreren Induktorelemente von dem Mittelbereich zu den zu beiden Seiten des Mittelbereichs angeordneten Bereichen hin stetig zunimmt.

Der Mittelbereich ist ein Bereich, welcher zentral zwischen zwei Randbereichen des jeweiligen Induktorelements angeordnet ist.

Günstig kann es sein, wenn das eine oder die mehreren Induktorelemente spiegelsymmetrisch bezüglich einer Ebene, in welcher die Induktorachse liegt, ausgebildet sind.

Es kann vorgesehen sein, dass die zu beiden Seiten des Mittelbereichs angeordneten Bereiche Randbereiche des einen oder der mehreren Induktorelemente bilden. In Ausführungsformen mit exakt einem Induktorelement sind die Randbereiche insbesondere an einander gegenüberliegenden Enden des Speicherraums angeordnet.

Vorzugsweise verjüngt sich eine radiale Ausdehnung des einen oder der mehreren Induktorelemente bezüglich der Induktorachse des jeweiligen Induktorelements von den zu beiden Seiten des Mittelbereichs angeordneten Bereichen zu dem Mittelbereich hin.

Es kann vorgesehen sein, dass die Wärmespeichervorrichtung ein Gehäuse zur Aufnahme des Speichermaterials umfasst und dass das eine oder die mehreren Induktorelemente an deren Außenseiten bezüglich einer Gehäusewandung des Gehäuses konkav ausgebildet sind.

Durch die konkave Ausbildung des einen oder der mehreren Induktorelemente erstreckt sich eine elektrische Stromdichte während einer Ausbildung eines magnetischen Wechselfeldes vorzugsweise über eine gesamte Höhe des jeweiligen Induktorelements parallel zu der Induktorachse.

In Ausführungsformen mit einem Induktorelement ist das Induktorelement vorzugsweise als eine Spule mit exakt einer Windung ausgebildet.

Insbesondere bilden das eine oder die mehreren Induktorelemente jeweils eine Windung einer Spule.

Vorzugsweise umfasst die Induktorvorrichtung ein bis sechs Induktorelemente.

Die jeweilige Windung erstreckt sich vorzugsweise um ca. 85 % oder mehr, insbesondere um ca. 90% oder mehr, eines Umfangs des Gehäuses, welches den Speicherraum umgibt.

Die Windung umgreift insbesondere das Gehäuse.

Vorzugsweise umfasst die Induktorvorrichtung eine oder mehrere Induktorrippen, welche sich von dem einen oder den mehreren Induktorelementen, insbesondere bezüglich der Induktorachse radial, weg erstrecken. Insbesondere bilden die eine oder mehreren Induktorrippen eine Kühlfluidführung zur Führung eines Kühlfluids.

Das Kühlfluid dient insbesondere einer Kühlung des einen oder der mehreren Induktorelemente.

Vorteilhaft kann es sein, wenn eine oder mehrere Induktorrippen der Induktorvorrichtung sich zwischen dem einen oder den mehreren Induktorelementen und einem elektrisch isolierten Außengehäuse der Wärmespeichervorrichtung erstrecken und ein Gehäuse der Wärmespeichervorrichtung, welches den Speicherraum umgibt, insbesondere helikal umgeben.

Insbesondere sind mehrere Induktorrippen vorgesehen, welche zu einer Spiralform miteinander verbunden sind.

Die Induktorrippen stützen sich vorzugsweise an einer Innenseite des Außengehäuses der Wärmespeichervorrichtung ab.

Die eine oder mehreren Induktorrippen bilden vorzugsweise einen Bestandteil einer Kühlvorrichtung zum Kühlen des einen oder der mehreren Induktorelemente.

Die eine oder mehreren Induktorrippen sind vorzugsweise kraftschlüssig und/oder formschlüssig und/oder stoffschlüssig mit dem einen oder den mehreren Induktorelementen verbunden.

Beispielsweise sind die eine oder die mehreren Induktorrippen mit dem einen oder den mehreren Induktorelementen verlötet und/oder mittels Hartlötens mit dem einen oder den mehreren Induktorelementen verbunden.

Das Fluid, welches durch den Speicherraum durchgeführt wird und/oder durchführbar ist, und das Kühlfluid sind vorzugsweise Luft.

Günstig kann es sein, wenn die Induktorvorrichtung zwei Elektroden zum Anlagen einer Wechselspannung an das eine oder die mehreren Induktorelemente umfasst. Die zwei Elektroden sind insbesondere auf einer gemeinsamen Mantellinie des Gehäuses der Wärmespeichervorrichtung angeordnet.

Alternativ sind die zwei Elektroden bezüglich eines Umfangs des Gehäuses einander gegenüberliegend angeordnet.

In Ausführungsformen mit einem Induktorelement kann vorgesehen sein, dass die Elektroden sich zu dem Induktorelement hin aufweiten und/oder erweitert ausgebildet sind. Dies dient vorzugsweise einer homogenen Ausbildung eines Magnetfelds über eine, insbesondere gesamte, Höhe des Induktorelements. Die Höhe ist vorzugsweise parallel zu der Induktorachse definiert.

Das Gehäuse, welches den Speicherraum umgibt, ist vorzugsweise zylinderförmig, insbesondere kreiszylinderförmig, beispielsweise hohlkreiszylinderförmig, ausgebildet.

Vorteilhaft kann es sein, wenn die Wärmespeichervorrichtung ein Außengehäuse, welches ein Gehäuse zur Aufnahme des Speichermaterials und die Induktorvorrichtung umgibt, umfasst.

Zwischen dem Außengehäuse und dem Gehäuse ist vorzugsweise ein Strömungsraum zur Strömung von Kühlfluid zur Kühlung des einen oder der mehreren Induktorelemente gebildet.

Die vorliegende Erfindung betrifft ferner eine Wärmespeichervorrichtung, welche ein Gehäuse, welches einen Speicherraum umgibt, umfasst.

Die Wärmespeichervorrichtung umfasst ferner in dem Speicherraum angeordnetes Speichermaterial, welches induktiv erwärmbar ist.

Die Wärmespeichervorrichtung umfasst ferner eine Induktorvorrichtung, welche das Gehäuse umgibt.

Das Gehäuse ist insbesondere ein Innengehäuse.

Ferner umfasst die Wärmespeichervorrichtung eine Fluidführung zum Zuführen und/oder Hindurchführen und/oder Abführen von Fluid zu/durch/aus dem Speicherraum.

Das Speichermaterial ist ein keramisches Speichermaterial und liegt als Schüttung in dem Speicherraum vor.

Durch die Bereitstellung des Speichermaterials als, insbesondere lose, Schüttung ist ein Montageaufwand im Vergleich zu Speichermaterialien mit einem Gestell vorzugsweise reduziert.

Es sind auch kompaktere Aufbauten der Wärmespeichervorrichtungen realisierbar, insbesondere da ein Gestell oder eine sonstige Halteeinrichtung für das Speichermaterial entbehrlich ist.

Günstig kann es sein, wenn das Speichermaterial als lose Schüttung in dem Speicherraum vorliegt.

Das Speichermaterial ist vorzugsweise elektrisch leitend und weist insbesondere eine elektrische Leitfähigkeit von ca. 1·10³ S/m oder mehr auf.

Alternativ zu der zuvor beschriebenen Luftkühlung, bei welcher das Kühlfluid Luft ist, ist auch eine Wasserkühlung des einen oder der mehreren Induktorelemente geeignet. Hierbei ist das Kühlfluid vorzugsweise Wasser.

Vorteilhaft kann es sein, wenn die Induktorvorrichtung ein oder mehrere Induktorelemente umfasst, welches als Spule ausgebildet sind oder eine Spule bilden, wobei eine oder mehrere Windungen der Spule um das Gehäuse gewickelt sind.

Günstig kann es sein, wenn das Speichermaterial mittels einer Isolationsschicht thermisch und/oder elektrisch von dem einen oder den mehreren Induktorelementen getrennt ist.

Die Isolationsschicht ist vorzugsweise eine elektrisch isolierende Schicht, welche auf eine Gehäusewandung des Gehäuses aufgebracht ist.

Hierbei kann vorgesehen sein, dass die Isolationsschicht auf eine Innenseite und/oder auf eine Außenseite der Gehäusewandung des Gehäuses aufgebracht und/oder stoffschlüssig mit dieser verbunden ist.

Alternativ kann vorgesehen sein, dass die Gehäusewandung selbst die Isolationsschicht bildet.

Die Isolationsschicht weist vorzugsweise eine elektrische Leitfähigkeit von ca. 1·10⁻⁸ S/m oder weniger auf.

Insbesondere weist die Isolationsschicht eine Wärmeleitfähigkeit von ca. 0,1 W/(m·K) oder weniger auf.

Beispielsweise umfasst die Isolationsschicht ein keramisches Material oder ist aus einem keramischen Material gebildet.

Beispielsweise umfasst die Isolationsschicht ein elektrisch isolierendes Polymermaterial oder ist aus einem elektrisch isolierenden Polymermaterial gebildet.

Günstig kann es sein, wenn das Speichermaterial partikelförmig ist. Einzelne Partikel des Speichermaterials sind insbesondere zumindest näherungsweise kugelförmig oder nicht-sphärisch, beispielsweise zumindest näherungsweise zylinderförmig oder zumindest näherungsweise torusförmig, ausgebildet.

Die Partikel weisen vorzugsweise einen mittleren Durchmesser von ca. 10 mm bis ca. 200 mm auf.

Der mittlere Durchmesser bezeichnet vorzugsweise ein arithmetisches Mittel über alle gemessenen Durchmesser.

Es kann vorgesehen sein, dass das Speichermaterial einen spezifischen elektrischen Widerstand von ca. 10⁻⁴ Ω·cm bis ca. 10⁻¹ Ω·cm aufweist. Bei Speichermaterialien mit einem spezifischen elektrischen Widerstand in dem genannten Bereich liegt ein induktiver Wirkungsgrad des Speichermaterials vorzugsweise bei 90 % oder mehr.

Vorteilhaft kann es sein, wenn das Speichermaterial eine Dichte in einem Bereich von ca. 2500 kg/m³ oder mehr, insbesondere von ca. 3000 kg/m³ oder mehr aufweist.

Es kann vorgesehen sein, dass das Speichermaterial eine Wärmekapazität Cₚ bei konstantem Druck und/oder einer Temperatur von 1000°C oder mehr von ca. 600 J/(kg·K) oder mehr, insbesondere von ca. 900 J/(kg·K) oder mehr, aufweist.

Das Speichermaterial weist vorzugsweise eine Wärmeleitfähigkeit von ca. 15 W/(m·K) oder mehr, insbesondere von 20 W/(m·K) oder mehr, auf.

Das Speichermaterial umfasst vorzugsweise eines oder mehrere der folgenden Materialien oder ist daraus gebildet: carbidkeramische Materialien, silizidkeramische Materialien, borkeramische Materialien.

Bevorzugte Beispiele für carbidkeramische Materialien sind Siliziumcarbid und/oder Titancarbid.

Ein bevorzugtes Material für ein silizidkeramisches Material ist Molybdän-Disilizid.

Molybdän-Disilizid ist insbesondere auch als Füllstoff für ein Material auf siliziumorganischer Basis geeignet.

Ein bevorzugtes Beispiel für ein borkeramisches Material ist Titanborid.

Der spezifische elektrische Widerstand von Siliziumcarbid kann beispielsweise durch Dotierung mit Stickstoff (N) reduziert werden.

Eine Einbringung von N in einem Anteil von mehr als ca. 0,8 Gew.-% resultiert beispielsweise in einem niedrigeren spezifischen elektrischen Widerstand im Vergleich zu SiC ohne Stickstoff.

Zur Einbringung/Dotierung wird beispielsweise ein Siliziumnitrid-Pulver bei der Herstellung des Siliziumcarbids verwendet.

Günstig kann es sein, wenn Siliziumcarbide mittels einer Silizium-Infiltration eines porösen Formkörpers hergestellt sind und/oder werden. Geeignete Verfahren zur Silizium-Infiltration sind beispielsweise ein LSI (liquid silicon infiltration)-Verfahren und/oder ein CVI(chemical vapor infiltration)-Verfahren.

Die infiltrierten Körper werden vorzugsweise anschließend und/oder während der Infiltration gesintert, beispielsweise bei ca. 900°C oder mehr.

Sinter-Verfahren werden vorzugsweise bei einer Temperatur von 1700°C oder weniger durchgeführt. So kann eine Bildung von α(alpha)-Siliziumcarbid minimiert werden. Der spezifische elektrische Widerstand von α(alpha)-Siliziumcarbid liegt über dem von β(beta)-Siliziumcarbid.

Insbesondere, da der spezifische elektrische Widerstand des Speichermaterials möglichst gering sein sollte, ist β(beta)-Siliziumcarbid im Vergleich zu α(alpha)-Siliziumcarbid als Material für das Speichermaterial bevorzugt. β(beta)-Siliziumcarbid ist eine Siliziumcarbid-Modifikation, welche eine kubische Kristallstruktur aufweist.

Vorteilhaft kann es sein, wenn das Speichermaterial ein SiSiC-basiertes Speichermaterial ist.

Es kann vorgesehen sein, dass das Speichermaterial eine Porosität, insbesondere eine offene Porosität, von ca. 0,15 oder weniger aufweist.

Vorzugsweise umfasst das Speichermaterial Partikel aus einem der folgenden Materialien oder ist aus einem der folgenden Materialien, insbesondere in Partikelform, gebildet: reaktionsgebundenes Siliziumcarbid, reaktionsgeformtes Siliziumcarbid, rekristallisiertes Siliziumcarbid.

Beispielsweise ist rekristallisiertes Siliziumcarbid mit einer, inbesondere offenen, Porosität von 0,15 oder weniger als Speichermaterial oder als Bestandteil davon geeignet.

Ergänzend oder alternativ eignen sich nicht poröses reaktionsgebundenes Siliziumcarbid und/oder nicht poröses reaktionsgeformtes Siliziumcarbid als Speichermaterial oder Bestandteil davon.

Auch Mischungen von Partikeln aus den genannten Materialien sind als Speichermaterial geeignet.

Das Speichermaterial weist vorzugsweise eine Temperaturschockbeständigkeit von ca. 50°C oder mehr, insbesondere von ca. 100°C oder mehr, insbesondere von ca. 150°C oder mehr, auf.

Die vorliegende Erfindung betrifft ferner eine Wärmespeichervorrichtung, wobei die Wärmespeichervorrichtung ein Gehäuse, welches einen Speicherraum umgibt, umfasst.

Die Wärmespeichervorrichtung umfasst ferner in dem Speicherraum angeordnetes Speichermaterial, welches induktiv erwärmbar ist, eine Induktorvorrichtung, welche das Gehäuse umgibt, und eine Fluidführung zum Zuführen und/oder Hindurchführen und/oder Abführen von Fluid zu/durch/aus dem Speicherraum.

Alternativ dazu, dass das Speichermaterial als lose Schüttung in dem Speicherraum vorliegt, kann es günstig sein, wenn das Speichermaterial in Form mindestens eines Einsatzelements in dem Speicherraum vorliegt.

Das mindestens eine Einsatzelement umfasst ein keramisches Material, insbesondere ein elektrisch leitfähiges keramisches Material, oder ist daraus gebildet. Ferner weist das mindestens eine Einsatzelement eine oder mehrere von dem Fluid durchströmbare Fluiddurchgangsöffnungen auf.

Unter "mindestens ein" Einsatzelement ist im Sinne der vorliegenden Beschreibung und der beigefügten Ansprüche vorzugsweise ein Einsatzelement oder mehrere Einsatzelemente zu verstehen.

Ein Einsatzelement ist vorzugsweise ein Element, welches einen Einsatz in dem Speicherraum bildet.

Das mindestens eine Einsatzelement ist vorzugsweise mindestens ein Formsteinelement, beispielsweise mindestens ein Formstein.

Vorteilhaft kann es sein, wenn das mindestens eine Einsatzelement in einem Extrusionsverfahren hergestellt ist und/oder wird.

Durch das mindestens eine Einsatzelement, insbesondere mindestens ein Formsteinelement, aus oder mit einem keramischen Material kann eine hohe Leistungsdichte bei kontaktloser Wärmetransformation erreicht werden. Insbesondere kann durch das mindestens eine Einsatzelement eine hohe spezifische Oberfläche, welche beispielsweise durch Anzahl und Durchmesser der Fluiddurchgangsöffnungen an die jeweiligen Anforderungen anpassbar ist, bereitgestellt und so ein effizienter Wärmetransport ermöglicht werden.

Vorzugsweise ist das mindestens eine Einsatzelement, beispielsweise durch eine Isolationsschicht, von der Induktorvorrichtung thermisch entkoppelt.

Vorzugsweise ist ein einziges, insbesondere einstückig ausgebildetes, Einsatzelement in dem Speicherraum angeordnet.

Eine Höhe des Einsatzelements beträgt vorzugsweise ca. 50 % oder mehr, insbesondere ca. 60 % oder mehr, beispielsweise ca. 70 % oder mehr, einer Höhe eines Gehäuses der Wärmespeichervorrichtung. Die Höhe des Gehäuses und die Höhe des Einsatzelements sind vorzugsweise parallel zu einer jeweiligen Mittelachse und/oder der Induktorachse definiert.

Günstig kann es sein, wenn die Höhe des Einsatzelements ca. 95 % oder weniger, insbesondere ca. 90 % oder weniger, beispielsweise ca. 85 % oder weniger, der Höhe des Gehäuses beträgt.

Gemäß einer bevorzugten Ausführungsform ist die Fluiddurchgangsöffnung oder sind eine oder mehrere der mehreren Fluiddurchgangsöffnungen des mindestens einen Einsatzelements durch eine offene Porosität des Materials des mindestens einen Einsatzelements gebildet.

Vorteilhaft kann es sein, wenn das mindestens eine Einsatzelement eine Porenverteilung aufweist, welche längs einer radialen Richtung bezüglich der Mittelachse des mindestens einen Einsatzelements variiert.

Vorzugsweise ist eine Verteilung der Poren in dem mindestens einen Einsatzelement an eine Verteilung der Leistungsdichte bei der induktiven Erwärmung angepasst.

Insbesondere können aufgrund eines sogenannten "Skin-Effekts" in bezüglich der Induktorachse und/oder einer Mittelachse des mindestens einen Einsatzelements radial außenliegenden Bereichen höhere Leistungen umgesetzt werden als in radial innenliegenden Bereichen. Daher ist das mindestens eine Einsatzelement vorzugsweise derart ausgebildet, dass es in radial außenliegenden Bereichen eine größere spezifische Oberfläche und/oder mehr Poren aufweist als in radial innenliegenden Bereichen.

Ergänzend oder alternativ kann gemäß einer weiteren bevorzugten Ausführungsform vorgesehen sein, dass die Fluiddurchgangsöffnung oder eine oder mehrere der mehreren Fluiddurchgangsöffnungen des mindestens einen Einsatzelements durch einen oder mehrere, insbesondere makroskopische und/oder regelmäßig angeordnete, Strömungskanäle in dem mindestens einen Einsatzelement ausgebildet sind. Haupterstreckungsrichtungen des einen oder der mehreren Strömungskanäle verlaufen vorzugsweise zumindest näherungsweise parallel zueinander und/oder zumindest näherungsweise parallel zu einer Induktorachse der Induktorvorrichtung.

Eine Anordnung und/oder eine Querschnittsform des einen oder der mehreren Strömungskanäle kann mittels Berechnungen bestimmt werden.

Vorzugsweise ist die Querschnittsform des einen oder der mehreren Strömungskanäle an eine Frequenz und eine Eindringtiefe eines Erwärmungsprozesses anpassbar und/oder angepasst.

Vorteilhaft kann es sein, wenn das Einsatzelement mehrere regelmäßig angeordnete Strömungskanäle aufweist, welche zwischen Wandungen des Einsatzelements gebildet sind.

Vorzugsweise bilden mehrere Strömungskanäle jeweils einen Strömungskanalring. Insbesondere weist das Einsatzelement mehrere Strömungskanalringe auf. Die mehreren Strömungskanalringe sind vorzugsweise koaxial und/oder weisen einen zumindest näherungsweise kreisförmigen Querschnitt oder einen zumindest näherungsweise polygonalen Querschnitt auf. Der Querschnitt ist insbesondere senkrecht zu der Induktorachse genommen.

Günstig kann es sein, wenn ein innerer Strömungskanalring und ein äußerer Strömungskanalring ausgebildet sind.

Gemäß einer bevorzugten Ausführungsform sind die durch die Strömungskanäle gebildeten Hohlräume in einen senkrecht zu der Induktorachse genommenen Querschnitt zumindest näherungsweise kreisringsegmentförmig.

Vorzugsweise weist das Einsatzelement mehrere koaxial angeordnete hohlzylinderförmige, insbesondere hohlkreiszylinderförmige, Wandungselemente auf, welche jeweils voneinander abweichende Durchmesser aufweisen und/oder ineinandergesteckt sind.

Die Wandungselemente sind vorzugsweise durch Verbindungswandungen miteinander verbunden, welche sich bezüglich der Induktorachse radial nach außen erstrecken.

Vorteilhaft kann es sein, wenn die Verbindungswandungen längs einer Umfangsrichtung des Einsatzelements regelmäßig angeordnet sind und/oder längs der Umfangsrichtung denselben Abstand aufweisen. Hierbei kann vorgesehen sein, dass Abstände von Verbindungswandungen, welche unterschiedliche Wandungselemente verbinden, voneinander abweichen.

Beispielsweise umfasst das Einsatzelement drei Wandungselemente, zwischen welchen in einem Querschnitt mehrere, beispielsweise zwei, Strömungskanalringe aus zumindest näherungsweise kreisringsegmentförmigen Hohlräumen und/oder Strömungskanälen gebildet sind.

Ein Abstand längs der Umfangsrichtung des Einsatzelements zwischen benachbarten Verbindungswandungen in einem inneren Strömungskanalring ist vorzugsweise zumindest näherungsweise doppelt so groß wie ein Abstand zwischen benachbarten Verbindungswandungen eines äußeren Strömungskanalrings längs der Umfangsrichtung des Einsatzelements.

Vorteilhaft kann es sein, wenn das Einsatzelement ergänzend oder alternativ zu Strömungskanälen mit einem zumindest näherungsweise kreisringsegmentförmigen Querschnitt einen oder mehrere Strömungskanäle aufweist, welche in einem senkrecht zu der Induktorachse genommenen Querschnitt zumindest näherungsweise kreisförmig sind.

Vorzugsweise weist das Einsatzelement einen zentralen Strömungskanal auf, dessen Querschnitt zumindest näherungsweise kreisförmig ist und/oder durch welchen die Mittelachse des Einsatzelements verläuft, wobei insbesondere die Mittelachse des Einsatzelements eine Symmetrieachse des zentralen Strömungskanals bildet.

Ergänzend oder alternativ zu kreissegmentförmigen Strömungskanälen kann vorgesehen sein, dass die durch die Strömungskanäle gebildeten Hohlräume in einem senkrecht zu der Induktorachse genommenen Querschnitt zumindest näherungsweise trapezförmig ausgebildet sind. Insbesondere sind die Hohlräume in einem Querschnitt jeweils in Form eines gleichschenkligen Trapezes, dessen Seiten gleich lang sind und dessen Grundseiten nicht gleich lang sind, ausgebildet.

Verbindungswandungen, welche zwei in Umfangsrichtung des Einsatzelements benachbarte Hohlräume voneinander trennen, verlaufen insbesondere bezüglich der Induktorachse entlang einer radialen Richtung nach außen.

Ergänzend oder alternativ können auch Strömungskanäle mit weiteren Querschnittsformen in dem Einsatzelement ausgebildet sein. Beispielsweise können Strömungskanäle, welche in einem Querschnitt rechteckförmig oder quadratisch sind, in dem Einsatzelement ausgebildet sein. Der Querschnitt ist vorzugsweise senkrecht zu der Induktorachse genommen.

Die vorstehenden Ausführungen bezüglich eines Einsatzelements gelten in Ausführungsformen mit mehreren Einsatzelementen vorzugsweise für sämtliche Einsatzelemente.

Eines oder mehrere der Merkmale des Materials des Speichermaterials und/oder einer oder mehrere Vorteile, welche im Zusammenhang mit dem als Schüttung in dem Speicherraum vorliegenden Speichermaterial beschrieben wurden (mit Ausnahme der Angaben zu den Partikeleigenschaften), gelten für das Material des mindestens einen Einsatzelements vorzugsweise gleichermaßen.

So umfasst das mindestens eine Einsatzelement vorzugsweise Molybdän-Disilizid, reaktionsgebundenes Siliziumcarbid, rekristallisiertes Siliziumcarbid oder Mischungen daraus oder ist daraus gebildet. Die genannten Materialien sind auch bei Temperaturen von 1000 °C oder mehr, insbesondere 1200°C oder mehr, stabil, so dass hiermit oder hieraus insbesondere prozesssichere Einsatzelemente hergestellt werden können.

Insbesondere reaktionsgebundenes Siliziumcarbid eignet sich als Material zur Herstellung des mindestens einen Einsatzelements in einem Extrusionsverfahren, insbesondere in einem Extrusionspressverfahren.

Die Erfindung betrifft ferner ein Verfahren zum Speichern und/oder Übertragen von Wärme, wobei das Verfahren das Erwärmen des Speichermaterials durch Anlegen einer Wechselspannung an ein oder mehrere Induktorelemente einer erfindungsgemäßen Wärmespeichervorrichtung umfasst.

Vorzugsweise umfasst das Verfahren eine Vorwärmung des Fluids durch Induktorabwärme.

Das Verfahren umfasst ferner das Entnehmen von Wärme aus dem Speichermaterial durch Zuführen und/oder Hindurchführen und/oder Abführen eines Fluids zu/durch/aus dem Speicherraum.

Je nach Anzahl an Induktorelementen ist eine Wechselspannung mit einer Frequenz von ca. 10 kHz bis ca. 1000 kHz besonders geeignet.

Die im Zusammenhang mit einer der erfindungsgemäßen Wärmespeichervorrichtung genannten Merkmale und/oder Vorteile gelten im Zusammenhang mit dem erfindungsgemäßen Verfahren vorzugsweise gleichermaßen.

Die zuvor beschriebenen Wärmespeichervorrichtungen eignen sich insbesondere zur Verwendung in elektrothermischen Speichern in Wärmekraftprozessen, beispielsweise in Clausius-Rankine-basierten Prozessen oder in Joule-basierten Prozessen.

Beispielsweise kann ein mittels der Wärmespeichervorrichtung erwärmtes Fluid in Dampfturbinen oder in Gasturbinen genutzt werden.

Mittels der Wärmespeichervorrichtung ist vorzugsweise das Fluid auf eine Temperatur von 900°C oder mehr, insbesondere von 1000°C oder mehr, beispielsweise von 1200°C oder mehr, erwärmbar.

Dies ist ein Vorteil gegenüber konventionellen Widerstandsheizern mit Heizdraht und metallischer Ummantelung, deren maximale Prozesstemperatur bei ca. 700°C liegt. Diese Widerstandsheizer sind materialbedingt nur bei Temperaturen bis zu 950°C einsetzbar und/oder weisen bei diesem Temperaturniveau eine Leistungsdichte bis maximal ca. 2 W/cm² auf und/oder erreichen Leistungen bis maximal 2 MWₑₗ. Bei höheren Temperaturen besteht eine Überhitzungsgefahr.

Insbesondere fällt eine Lebensdauer konventioneller Widerstandsheizer ab ca. 600°C exponentiell ab und liegt beispielsweise bei ca. 950°C bei 10000 Betriebsstunden.

Im Vergleich zu Wärmespeichervorrichtungen mit keramischem Speichermaterial fällt bei Vorrichtungen mit Eisen-basiertem Speichermaterial ein Wirkungsgrad eines induktiven Heizprozesses im Bereich der Curie-Temperatur von Eisen (768°C) oder darüber um 40% bis 50% ab. Resultierende Verluste müssen abtransportiert und/oder rückgekühlt werden.

Im Unterschied hierzu können Wärmespeichervorrichtungen mit keramischem Speichermaterial auch bei Temperaturen von ca. 900°C oder mehr, insbesondere von ca. 1000°C oder mehr, mit hohem Wirkungsgrad betrieben werden.

Die Wärmespeichervorrichtung weist vorzugsweise eines oder mehrere der folgenden Merkmale und/oder einen oder mehrere der folgenden Vorteile auf:
- Nutzung einer Induktorabwärme für eine Vorwärmung des Fluids und somit insbesondere ein erhöhter Prozesswirkungsgrad von größer 90%;
- durch eine konkave Ausbildung des Induktorelements, insbesondere in Kombination mit einer Berippung, ist eine effiziente technische Wärmerückgewinnung ausgebildet;
- im Vergleich zu Eisen-basierten Speichermaterialien sind keramische Speichermaterialien auch bei Temperaturen oberhalb der Curie-Temperatur von Eisen effizient induktiv beheizbar;
- das Speichermaterial ist von dem Fluid direkt durchströmbar;
- bei einer Beladung des Speichermaterials weist die Wärmespeichervorrichtung eine hohe elektrische und thermische Leistungsdichte auf, insbesondere bei gleichzeitiger Durchströmung mit Luft zum Wärmetransport auf einen nachgeschalteten thermischen Energiespeicher;
- bei einer Entladung des Speichermaterials weist das Speichermaterial durch die Schüttung im Vergleich zu Vollmaterialien eine erhöhte spezifische Oberfläche auf, welche insbesondere zur Wärmeübertragung zur Verfügung steht, was insbesondere zu einer erhöhten thermischen Leistungsdichte führt (insbesondere auch bei einer Durchströmung);
- eine hohe Speicherdichte aufgrund einer hohen Dichte und hohen Wärmekapazität bei konstantem Druck und einer Temperatur von mehr als 1000°C;
- eine Betriebsflexibilisierung durch einfache Verbindung mit herkömmlichen thermischen Energiespeichern;
- verringerte Überhitzungsgefahr aufgrund optimierter Wärmetransporteigenschaften;
- optimierte Skalierbarkeit, wodurch insbesondere eine kostenoptimierte Herstellung und ein kostenoptimierter Betrieb möglich ist;
- keine oder im Vergleich zu konventionellen Widerstandsheizern verringerte thermo-mechanische Spannungen des Speichermaterials;
- aufgrund einer erhöhten Thermoschockbeständigkeit des Speichermaterials weist das Speichermaterial auch bei Einsatztemperaturen von deutlich über 1000°C eine erhöhte Lebensdauer auf;
- durch das Speichermaterial ist eine Wärmerückgewinnung möglich;
- aufgrund verringerter oder nicht vorhandener thermo-mechanischer Spannungen kann die Wärmespeichervorrichtung im Vergleich zu herkömmlichen Widerstandsheizern eine erhöhte Lebensdauer aufweisen.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer erfindungsgemäßen Ausführungsform einer Wärmespeichervorrichtung, bei welcher ein Induktorelement zur induktiven Erwärmung von in einem Speicherraum enthaltenem Speichermaterial in Form einer Spule mit einer einzigen Windung ausgebildet ist;
- Fig. 2: eine schematische Darstellung einer nicht erfindungsgemäßen Ausführungsform einer Wärmespeichervorrichtung, welche ein keramisches, induktiv erwärmbares Speichermaterial umfasst, das als lose Schüttung in dem Speicherraum vorliegt;
- Fig. 3: ein Diagramm eines Verlaufs eines induktiven Wirkungsgrads unterschiedlicher Speichermaterialien, wobei der induktive Wirkungsgrad in Abhängigkeit eines Durchmessers der Partikel des Speichermaterials aufgetragen ist;
- Fig. 4: ein Diagramm, in welchem ein spezifischer elektrischer Widerstand unterschiedlicher Modifikationen technischer Siliziumcarbide temperaturabhängig aufgetragen ist;
- Fig. 5: eine schematische perspektivische Darstellung einer Induktorvorrichtung (ohne Induktorrippen dargestellt), welche mehrere Induktorelemente umfasst, die jeweils konkav bezüglich einer Gehäusewandung ausgebildet sind;
- Fig. 6: eine schematische Schnittdarstellung einer nicht erfindungsgemäßen Ausführungsform einer Wärmespeichervorrichtung, bei welcher das Speichermaterial in Form eines Einsatzelements in einem Gehäuse der Wärmespeichervorrichtung vorliegt;
- Fig. 7: eine schematische Schnittdarstellung des Gehäuses und des darin angeordneten Einsatzelements senkrecht zu der Induktorachse;
- Fig. 8: eine schematische Schnittdarstellung eines Gehäuses und eines darin angeordneten Einsatzelements einer weiteren Ausführungsform einer Wärmespeichervorrichtung, bei welcher das Einsatzelement einen spinnennetzartigen Querschnitt aufweist;
- Fig. 9: ein Diagramm eines Verlaufs eines induktiven Wirkungsgrads verschiedener zumindest näherungsweise zylinderförmiger Einsatzelemente und partikulärer Speichermaterial-Partikel aus unterschiedlichen Speichermaterialien, wobei der induktive Wirkungsgrad in Abhängigkeit eines Durchmessers des jeweiligen Einsatzelements bzw. Speichermaterial-Partikels aufgetragen ist; und
- Fig. 10: eine schematische Darstellung eines elektrothermischen Energiespeichersystems, bei welchem eine erfindungsgemäße Wärmespeichervorrichtung einem thermischen Energiespeicher in Strömungsrichtung des aufzuheizenden Fluids vorgeschaltet ist.

Gleiche oder funktional äquivalente Elemente sind in sämtlichen Figuren mit denselben Bezugszeichen versehen.

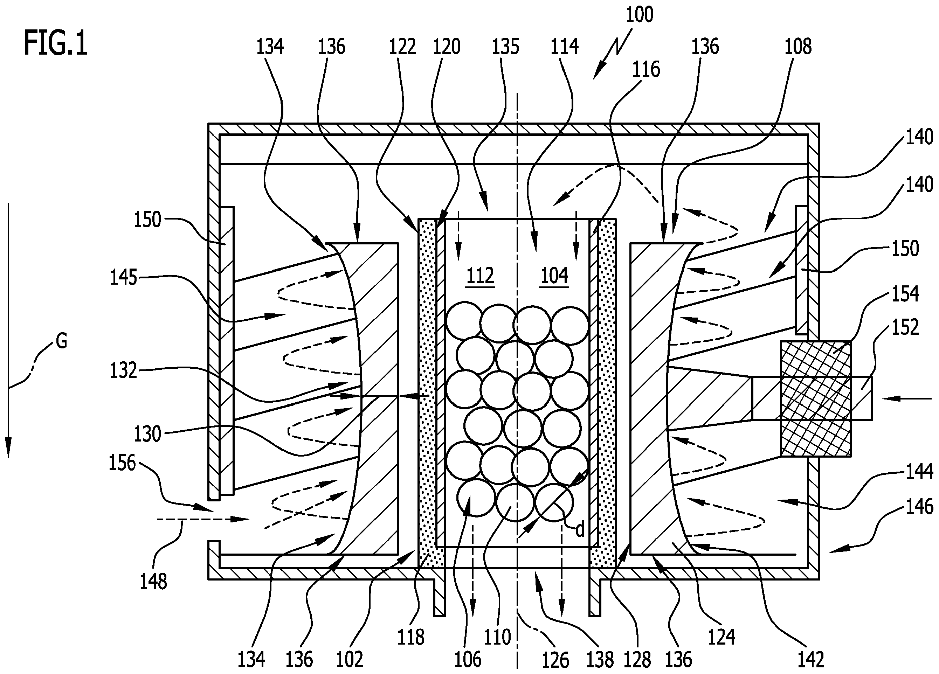

In Fig. 1 ist eine erste Ausführungsform einer als Ganzes mit 100 bezeichneten Wärmespeichervorrichtung gezeigt. Die Wärmespeichervorrichtung 100 eignet sich vorzugsweise zur Verwendung in Wärmekraftprozessen, insbesondere in Clausius-Rankine-basierten Prozessen oder in Joule-basierten Prozessen, beispielsweise in Kraftwerken.

Beispielsweise können Wärmespeichervorrichtungen 100 mit einem herkömmlichen thermischen Energiespeicher verbunden werden und ein Fluid, beispielsweise zum Betrieb einer Dampfturbine oder einer Gasturbine, erwärmen, bevor es dem herkömmlichen thermischen Energiespeicher zugeführt wird.

Die Wärmespeichervorrichtung 100 umfasst vorzugsweise ein Gehäuse 102, welches einen Speicherraum 104 der Wärmespeichervorrichtung umgibt, und eine Induktorvorrichtung 108 zur induktiven Erwärmung eines Speichermaterials 106.

Das Speichermaterial 106 ist vorzugsweise partikelförmig und/oder umfasst eine Mehrzahl von Partikeln 110. Die Partikel 110 sind insbesondere als, insbesondere lose, Schüttung in dem Speicherraum 104 aufgenommen.

Die Partikel 110 füllen ein von dem Speicherraum 104 gebildetes Volumen vorzugsweise vollständig oder teilweise aus.

Vorteilhaft kann es sein, wenn ein mittlerer Durchmesser d der Partikel 110 in einem Bereich von ca. 10 mm bis 200 mm liegt.

Der mittlere Durchmesser d wird insbesondere mittels bildgebender Verfahren, beispielsweise Lichtmikroskopie, bestimmt.

Günstig kann es sein, wenn einzelne Partikel 110 des Speichermaterials 106 zumindest näherungsweise kugelförmig ausgebildet sind. Dies ist insbesondere bei der induktiven Erwärmung des Speichermaterials 106 vorteilhaft.

Insbesondere kann mittels einer kugelförmigen Ausbildung der Partikel 110 des Speichermaterials 106 eine vorteilhafte Raumerfüllung ausgebildet sein, sodass durch Lücken zwischen den Partikeln 110 beispielsweise Strömungswege für ein Fluid 112, welches mittels einer Fluidführung 114 der Wärmespeichervorrichtung 100 durch den Speicherraum 104 hindurchgeführt wird, ausbildet sind.

Alternativ kann vorgesehen sein, dass die Partikel 110 nicht-sphärisch, beispielsweise zumindest näherungsweise zylinderförmig oder zumindest näherungsweise torusförmig, ausgebildet sind.

Auch Mischungen aus Partikeln 110 unterschiedlicher Form sind möglich.

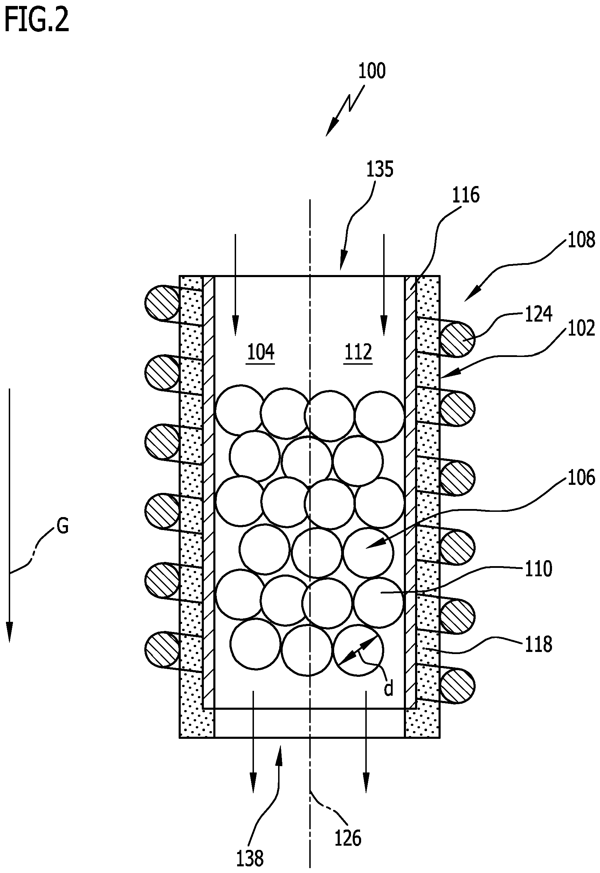

Günstig kann es sein, wenn das Speichermaterial 106 ein keramisches Speichermaterial 106 ist. Bevorzugte keramische Speichermaterialien 106 werden im Zusammenhang mit der zweiten Ausführungsform gemäß Fig. 2 näher erläutert.

Für die erste Ausführungsform der Wärmespeichervorrichtung 100 gemäß der Fig. 1 können auch induktiv erwärmbare, beispielsweise metallische, Speichermaterialien 106 verwendet werden.

Auch metallische Speichermaterialien 106, beispielsweise aus Stahl, lassen sich auf Temperaturen von mehr als 1000°C erwärmen.

Das Gehäuse 102 ist vorzugsweise zumindest näherungsweise zylinderförmig, insbesondere zumindest näherungsweise hohlzylinderförmig, beispielsweise zumindest näherungsweise hohlkreiszylinderförmig, ausgebildet. Beispielsweise ist das Gehäuse 102 ein Rohrelement.

Das Speichermaterial 106 ist vorliegend mittels einer Isolationsschicht 116 von einer Gehäusewandung 118 des Gehäuses 102 thermisch und/oder elektrisch und/oder mechanisch getrennt.

Die Isolationsschicht 116 ist vorzugsweise an einer dem Speicherraum 104 zugewandten Innenseite 120 der Gehäusewandung 118 des Gehäuses 102 angeordnet und/oder stoffschlüssig mit dieser verbunden.

Alternativ zu einer separaten Isolationsschicht 116 kann vorgesehen sein, dass die Gehäusewandung 118 thermisch und/oder elektrisch isolierend ausgebildet ist. Die Gehäusewandung 118 bildet dann insbesondere die Isolationsschicht 116.

Die Induktorvorrichtung 108 umfasst vorzugsweise ein Induktorelement 124, welches das Gehäuse 102 umgibt. Günstig kann es sein, wenn das Induktorelement 124 ca. 80 % oder mehr, insbesondere ca. 90 % oder mehr, eines Außenumfangs des Gehäuses 102 umgibt.

Vorteilhaft kann es sein, wenn das Induktorelement 124 in einem senkrecht zu einer Induktorachse 126 genommenen Querschnitt zumindest näherungsweise kreisförmig ausgebildet ist.

Vorliegend ist eine Innenseite 128 des Induktorelements 124 von der Außenseite 122 der Gehäusewandung 118 beabstandet angeordnet.

Alternativ kann vorgesehen sein, dass die der Gehäusewandung 118 zugewandte Innenseite 128 des Induktorelements 124 an einer Außenseite 122 der Gehäusewandung 118 anliegt.

Vorteilhaft kann es sein, wenn das Induktorelement 124 aus einem elektrisch leitfähigen Material hergestellt ist. Beispielsweise umfasst das Induktorelement 124 ein metallisches Material oder ist aus einem metallischen Material gebildet. Beispielsweise umfasst das Induktorelement 124 Kupfer oder ist aus Kupfer gebildet.

Eine Materialstärke 130 des Induktorelements 124 ist vorzugsweise senkrecht zu der Induktorachse 126 definiert.

Die Materialstärke 130 des Induktorelements 124 variiert vorliegend längs einer axialen Richtung der Induktorachse 126, wobei die Materialstärke 130 in einem Mittelbereich 132 des Induktorelements 124 am geringsten ist.

Eine maximale Materialstärke 130 weist das Induktorelement 124 vorzugsweise in zu beiden Seiten des Mittelbereichs 132 angeordneten Bereichen 134 auf. Die Bereiche 134 sind insbesondere Randbereiche 136 des Induktorelements 124.

Günstig kann es sein, wenn die Materialstärke 130 des Induktorelements 124 von einem Randbereich 136 bis zu dem Mittelbereich 132 längs der Induktorachse 126 stetig abnimmt.

Insbesondere nimmt die Materialstärke 130 des Induktorelements 124 von dem Mittelbereich 132 zu den beiden Randbereichen 134 längs der Induktorachse 126 jeweils stetig zu.

Die Randbereiche 136 des Induktorelements 124 sind insbesondere benachbart zu und/oder an einer Fluideintrittsseite 135 und einer Fluidaustrittsseite 138 des Speicherraums 104 angeordnet.

Vorteilhaft kann es sein, wenn die Randbereiche 136 des Induktorelements 124 an einander gegenüberliegenden Enden des Gehäuses 102 angeordnet sind.

Die einander gegenüberliegenden Enden des Gehäuses bilden vorliegend die Fluideintrittsseite 135 bzw. die Fluidaustrittsseite 138 des Speicherraums 104.

Eine dem Speicherraum 104 abgewandte Außenseite 142 des Induktorelements 124 ist vorzugsweise gewölbt ausgebildet. Insbesondere ist die Außenseite 142 bezüglich der Gehäusewandung 118 des Gehäuses 102 konkav ausgebildet.

Die Induktorvorrichtung 108 umfasst vorzugsweise ferner mehrere Induktorrippen 140, welche sich insbesondere von einer gewölbten Außenseite 142 des Induktorelements 124 weg erstrecken.

Vorliegend schließen die Induktorrippen 140 einen Strömungsraum 144 zwischen dem Induktorelement 124 und einem Außengehäuse 146 in einer parallel zu der Induktorachse 126 angeordneten Richtung, so dass insbesondere ein Kühlfluidführung 145 für ein Kühlfluid 148 definiert ist.

Das Außengehäuse 146 ist vorzugsweise zylinderförmig, insbesondere kreiszylinderförmig, beispielsweise hohlkreiszylinderförmig, ausgebildet.

Das Außengehäuse 146 und das Gehäuse 102 sind vorzugsweise zumindest näherungsweise koaxial angeordnet.

Die Kühlfluidführung 145 verläuft vorzugsweise derart, dass das Kühlfluid 148 um das Induktorelement 124, insbesondere helikal, herumgeführt wird.

Die Induktorrippen 140 sind vorliegend miteinander verbunden und/oder einteilig als Spirale gebildet.

Die Induktorrippen 140 umgeben das Induktorelement 124 vorliegend zumindest näherungsweise spiralförmig.

Vorteilhaft kann es sein, wenn die Induktorrippen 140 stoffschlüssig an dem Induktorelement 124 festgelegt sind. Beispielsweise sind die Induktorrippen an der Außenseite 142 des Induktorelements 124 mittels Lötens, insbesondere Hartlötens, festgelegt.

Alternativ sind die Induktorrippen 140 kraftschlüssig und/oder formschlüssig an dem Induktorelement 124 festgelegt.

Das Induktorelement 124 und/oder die Induktorrippen 140 sind vorzugsweise derart ausgebildet und angeordnet, dass eine Temperatur in den genannten Bauteilen ca. 250°C nicht übersteigt. So können lokale Festigkeitsgrenzen erhalten werden.

Günstig kann es sein, wenn das Außengehäuse 146 eine elektrische und/oder thermische Isolierung 150 aufweist, welche die Induktorrippen 140 und eine Wandung des Außengehäuses 146 thermisch und/oder mechanisch und/oder elektrisch voneinander trennen.

Durch die Isolierung 150 sind thermische Verluste an eine Umgebung der Wärmespeichervorrichtung 100 vorzugsweise minimiert.

Alternativ kann vorgesehen sein, dass das Außengehäuse 146 aus einem elektrisch und/oder thermisch isolierenden Material gefertigt ist.

Das Induktorelement 124 ist vorliegend mittels zwei Elektroden 152 mit einer Wechselspannung beaufschlagbar.

Die Elektroden 152 sind vorzugsweise bezüglich eines Außenumfangs des Induktorelements 124 in demselben Viertelkreissegment des Induktorelements 124 angeordnet.

Günstig kann es sein, wenn die Elektroden 152, insbesondere in demselben Viertelkreissegment des Außengehäuses 146, durch eine Durchführung 154 durch die Wandung des Außengehäuses 146 durchgeführt sind.

Die Elektroden 152 sind vorzugsweise zu dem Induktorelement 124 hin aufgeweitet.

Das Außengehäuse 146 weist vorzugsweise eine Kühlfluidzuführung 156 auf, welche vorliegend als Durchtrittsöffnung ausgebildet ist. Die Kühlfluidzuführung 156 bildet vorzugsweise einen Einlass für das Kühlfluid 148 zu der Kühlfluidführung 145.

Die Kühlfluidzuführung 156 ist vorzugsweise in einem bezüglich der Schwerkraftrichtung G unteren Bereich der Wärmespeichervorrichtung 100 angeordnet. Beispielsweise ist die Kühlfluidzuführung 156 an einem der Fluideintrittsseite 135 abgewandten Ende der Wärmespeichervorrichtung 100 angeordnet.

Zum Betreiben der Wärmespeichervorrichtung 100 wird vorzugsweise ein Kühlfluid 148 durch die Kühlfluidzuführung 156 der Kühlfluidführung 145 zugeführt und/oder spiralförmig um das Induktorelement 124 herumgeleitet.

Das Kühlfluid 148 kühlt vorzugsweise das Induktorelement 124 von außen und/oder von der Außenseite 142 des Induktorelements 124 her.

Für eine induktive Erwärmung des innerhalb des Speicherraums 104 angeordneten Speichermaterials 106 kann es vorteilhaft sein, wenn das Induktorelement 124 über die Elektroden 152 mit einer Wechselspannung beaufschlagt wird, insbesondere mit einer Frequenz von ca. 100 kHz bis ca. 1000 kHz.

Hierzu werden die Elektroden 152 beispielsweise mit einer Wechselstromquelle verbunden (nicht dargestellt).

Durch die Beaufschlagung mit der Wechselspannung fließt vorzugsweise ein elektrischer Wechselstrom durch das Induktorelement 124, wodurch ein magnetisches Wechselfeld erzeugt wird.

Das induktiv erwärmbare Speichermaterial 106 wird durch das magnetische Wechselfeld, insbesondere homogen, erwärmt. Das magnetische Wechselfeld des Induktorelements 124 induziert vorzugsweise Wirbelströme in dem Speichermaterial 106, welche dann in einer Erwärmung des Speichermaterials 106 resultieren.

Es wird vorzugsweise Wärme von dem Induktorelement 124 auf das Kühlfluid 148 übertragen, wodurch sich dieses innerhalb der Kühlfluidführung 145 erwärmt. Beispielsweise erfolgt ein konvektiver Wärmetransport von dem Induktorelement 124 auf die Kühlfluidführung 145.

Das Kühlfluid 148 und/oder das Fluid 112 sind vorzugsweise Luft, beispielsweise ein Prozess-Luftstrom.

Durch die Kühlfluidführung 145 gelangt das Kühlfluid, beispielsweise in erwärmten Zustand, zu der Fluideintrittsseite 135 des Speicherraum 104. Von dort wird es vorzugsweise als Fluid 112 durch die Fluidführung 114 geführt.

Vorliegend wird Wärme von dem induktiv erwärmten Speichermaterial 106 auf das Fluid 112 übertragen, insbesondere wenn es mit diesem in Kontakt kommt.

Das Fluid 112 mittels des Speichermaterials 106 erwärmt, bevor es an der Fluidaustrittsseite 138 den Speicherraum 104 und/oder die Wärmespeichervorrichtung 100 verlässt.

Der Verlauf einer Strömung des Kühlfluids 148 und/oder des Fluids 112 ist in Fig. 1 durch gestrichelte Pfeile schematisch angedeutet.

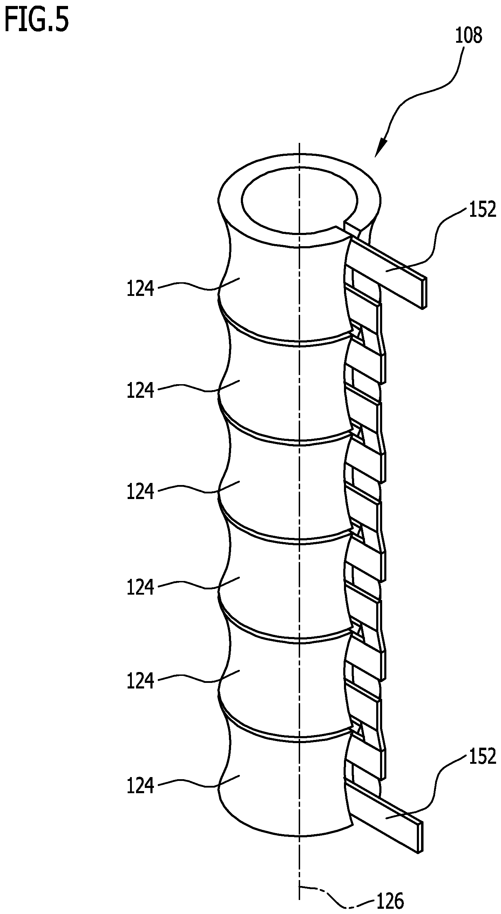

Eine in Fig. 5 dargestellte Induktorvorrichtung 108 unterscheidet sich hinsichtlich Aufbau und Funktion im Wesentlichen dadurch von der in Fig. 1 dargestellten Induktorvorrichtung 108, dass die Induktorvorrichtung 108 mehrere, vorliegend sechs, Induktorelemente 124 umfasst, welche in axialer Richtung der Induktorachse 126 übereinander angeordnet sind.

Günstig kann es sein, wenn die Induktorelemente 124 in axialer Richtung der Induktorachse 126 aufeinandergestapelt sind.

Die Induktorvorrichtung 108 umfasst vorzugsweise eine, insbesondere als Zuleitung ausgebildete, erste Elektrode 152 und eine, insbesondere als Zuleitung ausgebildete, zweite Elektrode 152.

Die erste Elektrode 152 und die zweite Elektrode 152 sind vorzugsweise an zwei einander gegenüberliegenden Enden der Induktorvorrichtung 108 angeordnet.

Vorteilhaft kann es sein, wenn in axialer Richtung der Induktorachse 126 benachbart angeordnete Induktorelemente 124 mittels einer Stromverteilungsschiene miteinander verbunden sind.

Es kann vorgesehen sein, dass die Stromverteilungsschiene in axialer Richtung der Induktorachse 126 unterbrochen ausgebildet ist und/oder jeweils eine Überbrückung zwischen benachbarten Induktorelementen 124 bildet. Alternativ ist die Stromverteilungsschiene bezüglich der axialen Richtung der Induktorachse 126 durchgängig ausgebildet.

Günstig kann es sein, wenn die Stromverteilungsschiene einen geringeren Leitungsquerschnitt aufweist als die Induktorelemente 124.

Die Elektroden 152 und die Stromverteilungsschiene sind vorzugsweise auf einer Mantellinie eines Hüllzylinders der Induktorvorrichtung 108 angeordnet. Im Übrigen stimmt die Induktorvorrichtung 108, insbesondere im Hinblick auf die Ausbildung der einzelnen Induktorelemente 124, hinsichtlich Aufbau und Funktion im Wesentlichen mit der in Fig. 1 dargestellten Induktorvorrichtung 108 überein, so dass auf deren Beschreibung insoweit Bezug genommen wird.

Eine in Fig. 2 dargestellte nicht erfindungsgemäße Ausführungsform einer Wärmespeichervorrichtung 100 unterscheidet sich hinsichtlich Aufbau und Funktion im Wesentlichen dadurch von der in Fig. 1 dargestellten erfindungsgemäßen Ausführungsform, dass das die Induktorvorrichtung 108 als Spule mit mehr als einer Windung, vorliegend sechs Windungen, ausgebildet ist.

Das Speichermaterial 106 ist vorliegend ein keramisches Speichermaterial 106.

Das Außengehäuse ist in Fig. 2 nicht dargestellt.

Die Windungen der Induktorvorrichtung 108 sind vorliegend helikal um das Gehäuse 102 angeordnet und/oder um das Gehäuse 102 herumgewickelt.

Die Induktorelemente 124 der Induktorvorrichtung 108 sind vorliegend drahtförmig, insbesondere als Runddraht, ausgebildet. Die einzelnen Induktorelemente 124 sind insbesondere stoffschlüssig miteinander verbunden und/oder bilden eine zylindrische Schraube.

Als besonders geeignete Speichermaterialien 106 haben sich Materialien erwiesen, welche einen spezifischen elektrischen Widerstand in einem Bereich von ca. 10⁻⁴ Ω·cm bis ca. 10⁻¹ Ω·cm aufweisen. So können vorzugsweise Energieverluste reduziert werden.

Vorteilhaft kann es sein, wenn das Speichermaterial 106 Partikel 110 aus Siliziumcarbid und/oder Molybdän-Disilizid und/oder Titancarbid und/oder Titanborid umfasst.

Als besonders bevorzugte Siliziumcarbidmaterialien haben sich technische Siliziumcarbidmaterialien, beispielsweise reaktionsgebundene Siliziumcarbid (RB-SiC), reaktionsgeformtes Siliziumcarbid (RF-SiC) und/oder rekristallisiertes Siliziumcarbid (R-SiC) erwiesen.

Die genannten Siliziumcarbidmaterialien weisen insbesondere eine vergleichbar hohe Thermoschockbeständigkeit, eine Dichte von mehr als 3000 kg/m³, eine spezifische Wärmekapazität bei konstantem Druck C_{P} von mehr als 600 J/(kg·K) und/oder eine Wärmeleitfähigkeit von mehr als 20 W/(m·K) auf.

Günstig kann es sein, wenn rekristallisiertes Siliziumcarbid mit einer Porosität, insbesondere einer offenen Porosität, von weniger als 0,15 eingesetzt wird.

Bei reaktionsgebundenem Siliziumcarbid und/oder reaktionsgeformtem Siliziumcarbid hat es sich als günstig erwiesen, wenn das Material im Wesentlichen keine Porosität aufweist.

Reaktionsgebundenes Siliziumcarbid wird insbesondere mittels einer Silizium-Infiltration hergestellt, bei welcher ein poröser Formkörper mit Silizium infiltriert wird.

Günstig kann es sein, wenn der poröse Formkörper aus Siliziumcarbid in Pulverform und/oder als Granulat hergestellt wird, welches in eine Kohlenstoffmatrix eingebettet wird.

Der poröse Formkörper wird anschließend vorzugsweise mit gasförmigem Silizium infiltriert und/oder in einer Siliziumatmosphäre gesintert. Hierbei bildet sich vorzugsweise Siliziumcarbid in einer kubischen Modifikation, nämlich β(beta)-Siliziumcarbid.

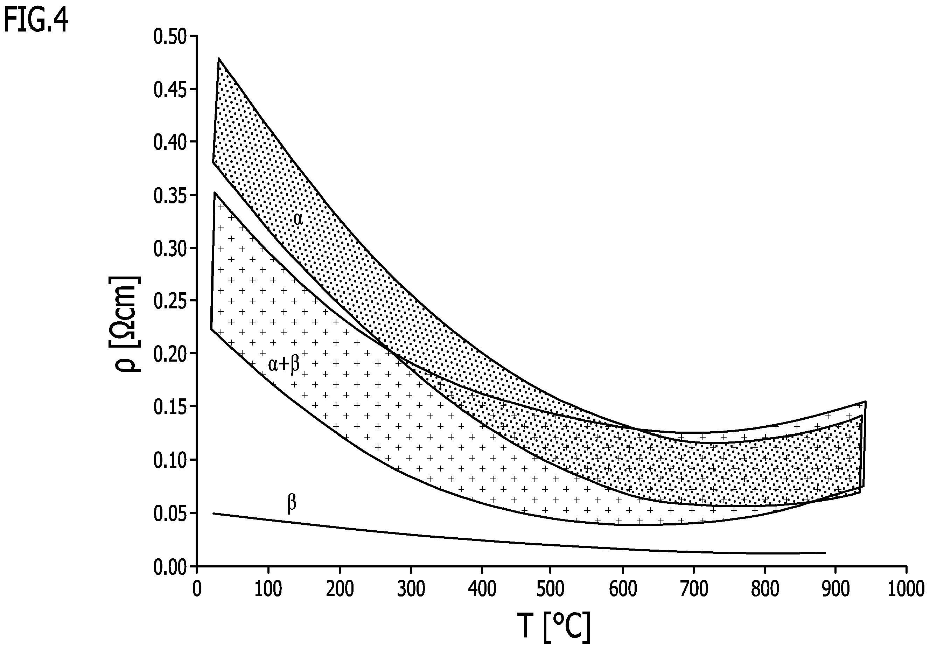

Unterschiedliche Siliziumcarbid-Modifikationen bzw. unterschiedliche Phasen sind in Fig. 4 dargestellt.

Die Herstellung des porösen Formkörpers erfolgt vorzugsweise bei ca. 300°C.

Eine an dem Formkörper durchgeführte Pyrolyse erfolgt insbesondere in einem Bereich von ca. 900°C bis ca. 1500°C. Hierbei erfolgt beispielsweise bei ca. 900°C eine Carbonisierung.

Bei einer Temperatur von ca. 1450°C, beispielsweise drucklos in einer Siliziumatmosphäre, erfolgt vorzugsweise die Infiltration des carbonisierten Formkörpers mit Silizium. Beispielsweise wird ein Sinter-Verfahren durchgeführt.

Das resultierende reaktionsgebundene Siliziumcarbid weist vorzugsweise eine Matrix aus SiSiC und β(beta)-Siliziumcarbid auf. SiSiC beschreibt vorzugsweise ein Material, welches aus Siliziumcarbid mit freiem Silizium besteht.

Zur Formgebung des porösen Formkörpers können folgende Verfahren verwendet werden: Extrusionspressverfahren, Spritzgussverfahren, Warmpressverfahren, additive Verfahren.

Zur Herstellung von reaktionsgeformtem SiC wird vorzugsweise eine Silizium-Infiltration mit flüssigem Silizium (liquid silicon infiltration) durchgeführt.

Bezüglich der Herstellung des porösen Formkörpers und Temperaturen während einer anschließenden Pyrolyse und/oder Infiltration entspricht das Verfahren insbesondere dem Verfahren zur Herstellung von reaktionsgebundenem SiC.

Durch die Infiltration mit flüssigem Silizium resultiert vorzugsweise eine Matrix aus SiSiC/C-SiSiC und β(beta)-Siliziumcarbid.

C-SiSiC beschreibt insbesondere ein SiSiC-Material, welches freie Kohlenstoffphasen enthält.

Ein SiC-Gehalt der resultierenden Carbidkeramik bei reaktionsgeformtem Siliziumcarbid beträgt vorzugsweise bis zu 85 Vol.-%.

Zur Herstellung von rekristallisiertem Siliziumcarbid wird vorzugsweise ein, insbesondere homogen verteiltes, Pulvergemisch aus Silizium-Pulver und SiC-Pulver mit unterschiedlicher Korngröße gesintert.

Beispielsweise wird Silizium-Pulver mit einer Korngröße von ca. 100 µm und SiC-Pulver mit einer geringeren Korngröße verwendet.

Der Sinterprozess erfolgt vorzugsweise bei ca. 2200°C bis ca. 2500°C. Es resultiert ein poröser Siliziumcarbidkörper.

Alternativ kann vorgesehen sein, dass ein drucklos gesintertes Siliziumcarbidmaterial verwendet wird, und ein spezifischer elektrischer Widerstand nachträglich reduziert wird.

Zur Reduktion des spezifischen elektrischen Widerstands von Siliziumcarbid wird vorzugsweise Stickstoff (N) in das Material eingebracht. Beispielsweise wird ein Siliziumnitrid-Pulver in einem Anteil von 0,8 Gew.-% oder mehr bei der Herstellung der Carbidkeramik eingesetzt.

Ergänzend oder alternativ zu siliziumcarbidkeramischen Materialien sind auch titancarbidkeramische Materialien als Speichermaterial 106 geeignet.

Alternativ zu carbidkeramischen Materialien sind auch andere keramische Materialien, beispielsweise silizidkeramische Materialien und/oder boridkeramische Materialien als Speichermaterial geeignet.

Beispielsweise ist Molybdän-Disilizid als Speichermaterial 106 geeignet.

Ein beispielhaftes boridkeramisches Material ist Titanborid.

Es werden vorzugsweise Molybdän-Disilizidmaterialien verwendet, welche eine oder mehrere der folgenden Eigenschaften aufweisen:
- einer Dichte von ca. 5000 kg/m³ bis ca. 6000 kg/m³, beispielsweise ca. 5600 kg/m³; und/oder
- eine Wärmekapazität C_{P} bei konstantem Druck von ca. 400 kg/m² bis ca. 500 kg/m², beispielsweise ca. 460 kg/m²; und/oder
- eine Wärmeleitfähigkeit von ca. 10 W/(m·K) bis ca. 20 W/(m·K), beispielsweise ca. 15 W/(m·K).

Die genannten Eigenschaften weist das Molybdän-Disilizidmaterial vorzugsweise bei Temperaturen von über 600°C auf.

Günstig kann es sein, wenn das Molybdän-Disilizidmaterial einen spezifischen elektrischen Widerstand von ca. 2,5·10⁻⁵ Ω·cm bei Raumtemperatur und/oder einen spezifischen elektrischen Widerstand von 4·10⁻⁴Ωcm bei 1800°C aufweist.

Der spezifische elektrische Widerstand des jeweiligen Speichermaterials 106, beispielsweise Molybdän-Disilizid, kann beispielsweise durch Verwendung eines Füllstoffs oder durch die Verwendung von Molybdän-Disilizid als Füllstoff erhöht werden.

Es kann vorgesehen sein, dass Molybdän-Disilizid in Kombination mit einem siliziumorganischen Polymer und/oder Aluminiumoxid und/oder weiteren Füllstoffen verwendet werden.

Im Übrigen stimmt die in Fig. 2 dargestellte zweite Ausführungsform einer Wärmespeichervorrichtung 100 hinsichtlich Aufbau und Funktion mit der in Fig. 1 dargestellten Ausführungsform überein, so dass auf deren Beschreibung insoweit Bezug genommen wird.

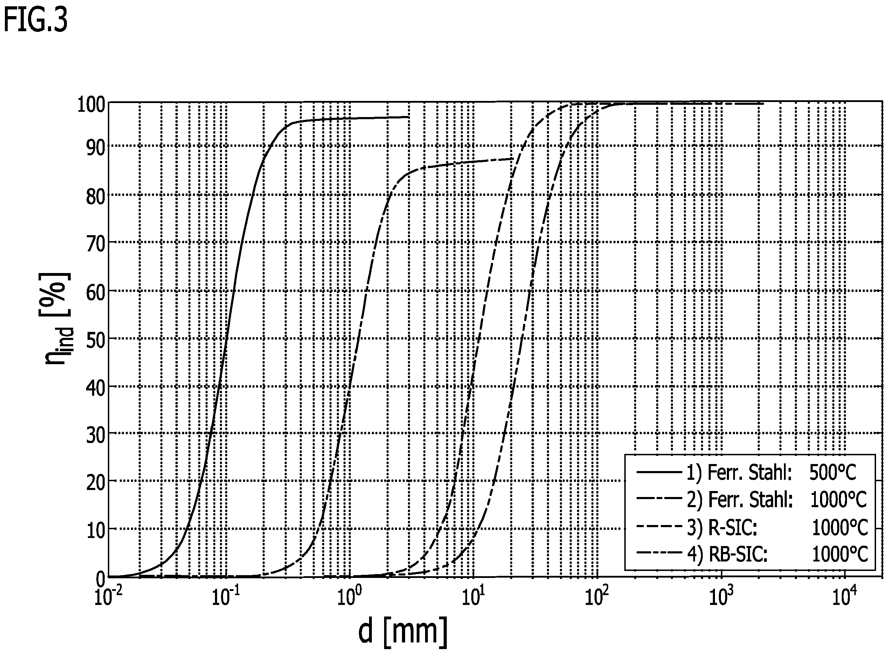

In Fig. 3 sind unterschiedliche Materialien als Speichermaterialien 106 in Kugelform mit unterschiedlichem Durchmesser der Partikel modellhaft abgebildet.

Es wurde jeweils der induktive Wirkungsgrad untersucht. Der induktive Wirkungsgrad entspricht dem elektrischen Wirkungsgrad.

Graph 1) und 2) zeigen den induktiven Wirkungsgrad ferritischen Stahls bei Temperaturen von 500°C (Graph 1) und 1000°C (Graph 2) abhängig von dem jeweiligen Durchmesser.

Auf der X-Achse ist der Durchmesser d der Partikel in Millimeter (mm) aufgetragen, während auf der Y-Achse der induktive Wirkungsgrad in Prozent angegeben ist.

Graph 3) zeigt den induktiven Wirkungsgrad von rekristallisiertem Siliziumcarbid (R-SiC) mit unterschiedlichem Durchmesser der Partikel bei 1000°C.

Graph 4) zeigt den induktiven Wirkungsgrad von reaktionsgebundenem Siliziumcarbid (RB-SiC) mit unterschiedlichem Durchmesser der Partikel bei 1000°C.

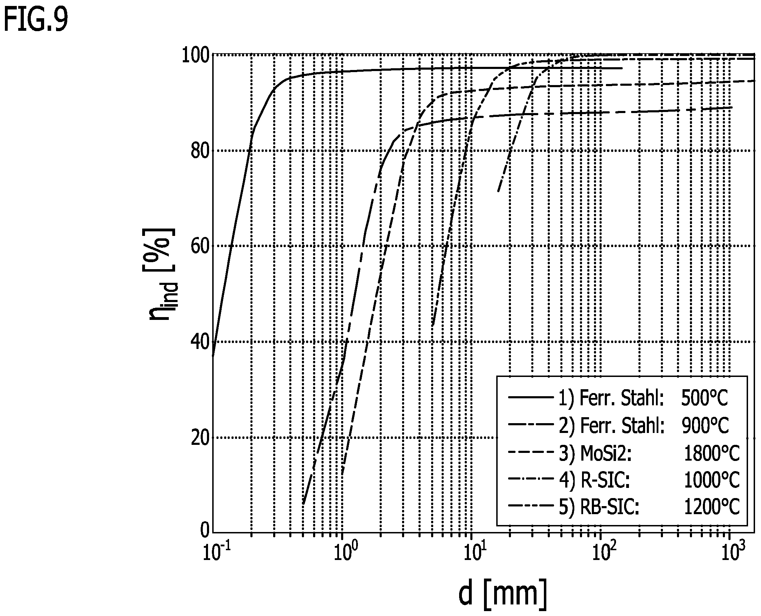

Aus den unterschiedlichen Graphen ist ersichtlich, dass der induktive Wirkungsgrad, welcher zur induktiven Erwärmung möglichst hoch sein sollte, bei rekristallisiertem Siliziumcarbid mit einen Durchmesser d der Partikel von größer als 20 mm und reaktionsgebundenem Siliziumcarbid mit einem Durchmesser d der Partikel von größer als 50 mm jeweils größer ist als für Partikel derselben Größe aus ferritischem Stahl. Dies gilt insbesondere für Prozesstemperaturen von 900°C oder mehr (vgl. auch Fig. 9).

Insbesondere bei Temperaturen, welche oberhalb einer Curie-Temperatur von Stahl liegt (786°C), lassen sich die Partikel aus Siliziumcarbidmaterialien im Vergleich zu den Partikeln aus ferritischem Stahl besser erwärmen.

Somit können keramische Speichermaterialen 106 bei Temperaturen von 900°C oder mehr (vorliegend 1000°C oder mehr) bei gleichzeitig hohem induktivem Wirkungsgrad in der Wärmespeichervorrichtung 100 verwendet werden.

In Fig. 4 ist der spezifische elektrische Widerstand unterschiedlicher Modifikationen technischen Siliziumcarbids gezeigt.

Der spezifische elektrische Widerstand ist temperaturabhängig für die Modifikationen α(alpha)-Siliziumcarbid, β(beta)-Siliziumcarbid, und eine gemischte Phase daraus aufgetragen.

Zur induktiven Erwärmung ist ein möglichst geringer spezifischer elektrischer Widerstand vorteilhaft.

Aus Fig. 4 ist ersichtlich, dass β(beta)-Siliziumcarbid, welches eine kubische Modifikation aufweist, in einem Temperaturbereich von etwas über 0°C bis knapp unter 900°C einen vergleichsweise konstanten spezifischen elektrischen Widerstand aufweist.

Der spezifische elektrische Widerstand von β(beta)-Siliziumcarbid ist deutlich geringer als der spezifische elektrische Widerstand der anderen untersuchten Materialien.

In Bezug auf Siliziumcarbid ist β(beta)-Siliziumcarbid besonders geeignet als Speichermaterial 106.

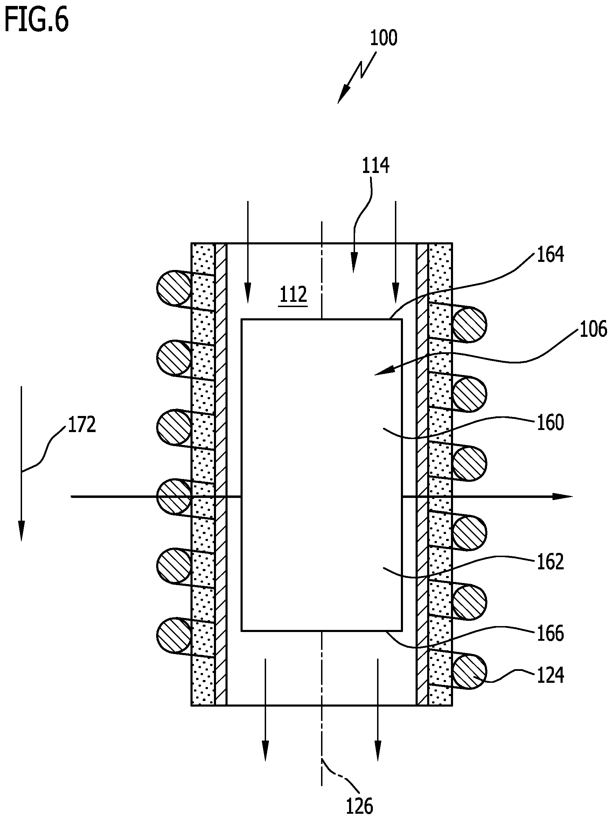

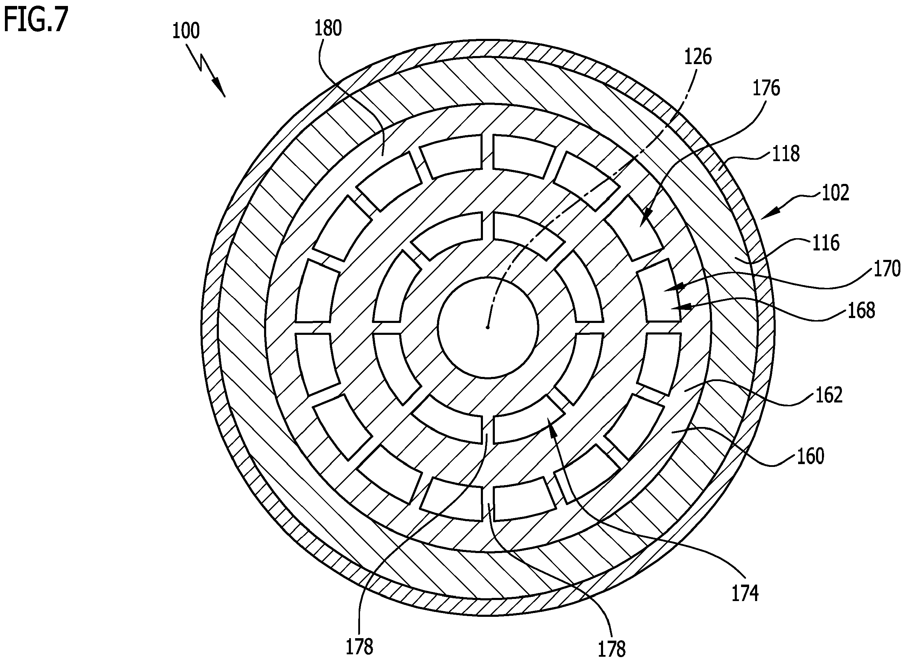

Eine in den Figuren 6 und 7 dargestellte weitere Ausführungsform einer Wärmespeichervorrichtung 100 unterscheidet sich im Wesentlichen dadurch von der in Fig. 2 dargestellten zweiten Ausführungsform, dass das Speichermaterial 106 in Form eines Einsatzelements 160 ausgebildet ist.

Das Einsatzelement 160 kann auch in Induktorvorrichtungen 108 gemäß einer der alternativen Ausführungsformen, beispielsweise mit einem ein-windigen Induktorelement 124, eingesetzt werden.

Vorliegend umfasst die Wärmespeichervorrichtung 100 ein einziges Einsatzelement 160, dessen Höhe längs einer parallel zu der Induktorachse 126 verlaufenden Richtung ca. 50 % oder mehr, insbesondere ca. 60 % oder mehr, einer Höhe der Gehäusewandung 118 des Gehäuses 102 beträgt.

Vorzugsweise beträgt die Höhe des Einsatzelements 160 in einer parallel zu der Induktorachse 126 verlaufenden Richtung ca. 90 % oder weniger, insbesondere ca. 85 % oder weniger, der Höhe der Gehäusewandung 118 des Gehäuses 102.

Alternativ zu der in den Figuren 6 und 7 dargestellten Ausführungsform kann vorgesehen sein, dass die Wärmespeichervorrichtung 100 mehrere Einsatzelemente 160 umfasst, welche insbesondere längs einer parallel zu der Induktorachse 126 verlaufenden Richtung übereinandergestapelt sind.

Das Einsatzelement 160 ist vorliegend ein Formsteinelement 162, beispielsweise ein Formstein und/oder einstückig.

Vorzugsweise ist das Einsatzelement 160 in einem Extrusionsverfahren, beispielsweise in einem Extrusionspressverfahren, hergestellt.

Das Einsatzelement 160 ist vorzugsweise zumindest näherungsweise zylinderförmig, insbesondere zumindest näherungsweise hohlzylinderförmig, beispielsweise zumindest näherungsweise hohlkreiszylinderförmig, ausgebildet.

Zentral weist das Einsatzelement 160 vorliegend einen von Fluid 112 durchströmbaren Strömungskanal 170 auf, dessen Mittelachse mit der Induktorachse 126 identisch ist. Der zentral angeordnete Strömungskanal 170 ist in einem senkrecht zu der Induktorachse 126 genommenen Querschnitt vorliegend zumindest näherungsweise kreisförmig.

Insbesondere für eine optimierte Temperaturstabilität und/oder einen optimierten induktiven Wirkungsgrad kann es vorteilhaft sein, wenn das Einsatzelement 160 ein keramisches Material, insbesondere ein elektrisch leitfähiges keramisches Material, umfasst oder daraus gebildet ist.

Bevorzugte Materialien sind Molybdän-Disilizid, reaktionsgebundenes Siliziumcarbid, rekristallisiertes Siliziumcarbid oder Mischungen daraus.

Insbesondere reaktionsgebundenes Siliziumcarbid eignet sich als Material zur Verwendung in einem Extrusionsverfahren, beispielsweise einem Extrusionspressverfahren.

Das Einsatzelement 160 ist vorliegend innerhalb der Fluidführung 114 angeordnet oder bildet einen Teil der Fluidführung 114.

Vorteilhaft kann es sein, wenn das Fluid 112 von einer ersten Stirnseite 164 des Einsatzelements 160 durch einen Grundkörper des Einsatzelements 160 hindurch zu einer zweiten Stirnseite 166 des Einsatzelements 160 strömt.

Hierzu weist das Einsatzelement 160 vorzugsweise eine oder mehrere Fluiddurchgangsöffnungen 168 auf, durch welche das Fluid 112 hindurchströmen kann.

Vorliegend sind mehrere Fluiddurchgangsöffnungen 168 in Form von Strömungskanälen 170 ausgebildet (vgl. Fig. 7). Das Induktorelement 124 ist in Fig. 7 nicht dargestellt.

Ergänzend oder alternativ kann vorgesehen sein, dass eine oder mehrere Fluiddurchgangsöffnungen 168 durch eine offene Porosität des Materials des Einsatzelements 160 gebildet sind.

Insbesondere weist das Einsatzelement 160 eine Porenverteilung auf, gemäß welcher ein Anteil an Poren radial nach außen graduell zunimmt. Vorzugsweise weisen radial außenliegende Bereiche mehr Poren auf als radial innenliegende Bereiche und es wird so insbesondere in radial außenliegenden Bereichen eine größere spezifische Oberfläche bereitgestellt als in radial innenliegenden Bereichen des Einsatzelements 160. "Radial außenliegend" und/oder "radial innenliegend" beziehen sich insbesondere jeweils auf die Induktorachse 126.

Die Strömungskanäle 170 erstrecken sich vorliegend von der ersten Stirnseite 164 zu der zweiten Stirnseite 166 entlang von Haupterstreckungsrichtungen 172, welche zumindest näherungsweise parallel zu der Induktorachse 126 verlaufen.

Die Induktorachse 126 ist vorzugsweise zumindest näherungsweise parallel zu einer Mittelachse und/oder einer Symmetrieachse und/oder einer Längsmittelachse des Einsatzelements 160.

Wie insbesondere in Fig. 7 zu sehen ist, sind entlang einer radialen Richtung bezüglich der Induktorachse 126 das Einsatzelement 160, eine Isolationsschicht 116 und die Gehäusewandung 118 des Gehäuses 102 hintereinander angeordnet.

Vorliegend weist das Einsatzelement 160 einen inneren Strömungskanalring 174 und einen äußeren Strömungskanalring 176 auf, welche entlang radialer Richtungen bezüglich der Induktorachse 126 hintereinander angeordnet sind.

Der innere Strömungskanalring 174 und der äußere Strömungskanalring 176 sind vorliegend in einem senkrecht zu der Induktorachse 126 genommenen Querschnitt zumindest näherungsweise kreisförmig.

Von Wandungen der Strömungskanäle 170 gebildete Hohlräume weisen vorzugsweise einen zumindest näherungsweise kreisringsegmentförmigen Querschnitt auf. Der Querschnitt ist insbesondere senkrecht zu der Induktorachse 126 genommen.

Vorteilhaft kann es sein, wenn von Strömungskanälen 170 gebildete Hohlräume des inneren Strömungskanalrings 174 längs einer Umfangsrichtung des Einsatzelements 160 durch Verbindungswandungen 178 voneinander getrennt sind.

Günstig kann es sein, wenn von Strömungskanälen 170 gebildete Hohlräume des äußeren Strömungskanalrings 176 längs der Umfangsrichtung des Einsatzelements 160 durch Verbindungswandungen 178 voneinander getrennt sind.

Die Verbindungswandungen 178 verbinden vorzugsweise jeweils zumindest näherungsweise hohlkreiszylinderförmige Wandungselemente 180 des Einsatzelements 160 in radialen Richtungen bezüglich der Induktorachse 126.

Vorliegend umfasst das Einsatzelement 160 drei zumindest näherungsweise hohlkreiszylinderförmige Wandlungselemente 180, welche längs radialer Richtungen bezüglich der Induktorachse 126 durch Verbindungswandungen 178 miteinander verbunden sind.

Vorteilhaft kann es sein, wenn ein Abstand zwischen in Umfangsrichtung benachbarten Verbindungswandungen 178 des inneren Strömungskanalrings 174 zumindest näherungsweise das Doppelte eines Abstands zwischen in Umfangsrichtung benachbarten Verbindungswandungen 178 des äußeren Strömungskanalrings 176 beträgt.

Partikelförmiges Speichermaterial 106 ist insbesondere entbehrlich.

Im Übrigen stimmt die in den Figuren 6 und 7 dargestellte weitere Ausführungsform einer Wärmespeichervorrichtung 100 hinsichtlich Aufbau und Funktion im Wesentlichen mit der in Fig. 2 dargestellten zweiten Ausführungsform überein, sodass auf deren Beschreibung insoweit Bezug genommen wird.

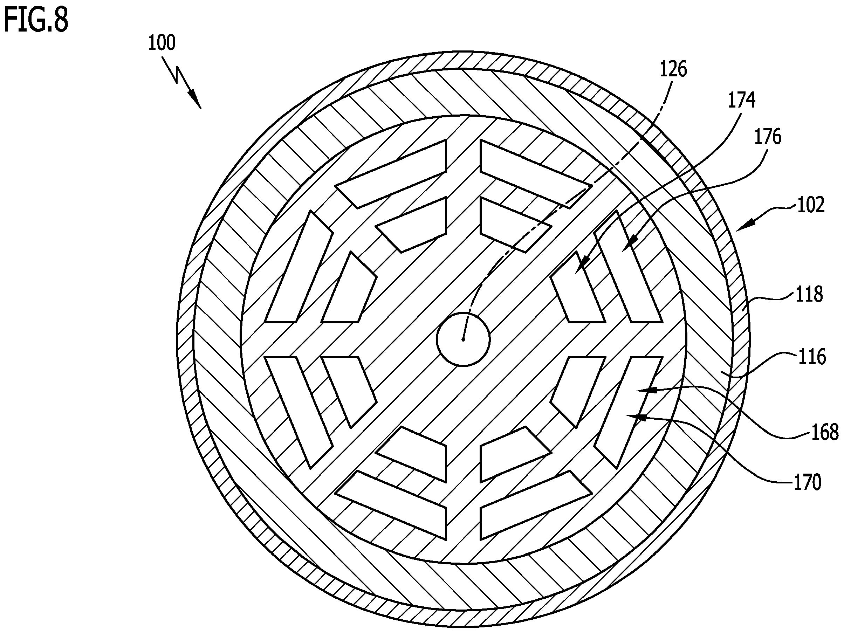

Eine in Fig. 8 zeichnerisch nicht als Ganzes dargestellte weitere Ausführungsform einer Wärmespeichervorrichtung 100 unterscheidet sich hinsichtlich Aufbau und Funktion im Wesentlichen dadurch von der in den Figuren 6 und 7 dargestellten Ausführungsform, dass die Strömungskanäle 170 in einem senkrecht zu der Induktorachse 126 genommenen Querschnitt zumindest näherungsweise trapezförmig sind.

Vorzugsweise ist der Querschnitt der Strömungskanäle 170 jeweils in Form eines gleichschenkligen Trapezes ausgebildet, wobei nicht die Grundseiten des Trapezes dieselbe Länge aufweisen.

Vorzugsweise weist das Einsatzelement 160 aufgrund der Anordnung der Strömungskanäle 170 in einem Querschnitt eine spinnennetzartige Struktur auf.

Anstatt eines kreisförmigen inneren Strömungskanalrings 174 und eines kreisförmigen äußeren Strömungskanalrings 176 bilden die Strömungskanalringe 174, 176 jeweils in einem Querschnitt oktogonale Formen.

In Ausführungsformen, in welchen längs der Umfangsrichtung des Einsatzelements 160 eine andere Anzahl an Strömungskanälen 170 ausgebildet ist, bilden die Strömungskanäle jeweils eine entsprechend der Anzahl andere polygonale Form.

Im Übrigen stimmt die in Fig. 8 zeichnerisch nicht als Ganzes dargestellte weitere Ausführungsform einer Wärmespeichervorrichtung 100 hinsichtlich Aufbau und Funktion im Wesentlichen mit der in den Figuren 7 und 8 dargestellten Ausführungsform überein, sodass auf deren Beschreibung insoweit Bezug genommen wird.

In Fig. 9 ist der induktive Wirkungsgrad in Prozent [%] auf der Y-Achse aufgetragen. Auf der X-Achse sind unterschiedliche Durchmesser d aufgetragen.

Die Angaben der Graphen gelten vorzugsweise sowohl für Durchmesser d zylinderförmiger Einsatzelemente 160 als auch für Durchmesser d der Partikel 110 eines partikelförmigen Speichermaterials 106 (vgl. auch Fig. 3).

Es wurden Einsatzelemente 160 und Partikel 110 aus den folgenden Materialien untersucht:
- Graph 1) zeigt den induktiven Wirkungsgrad zylinderförmiger Einsatzelemente 160/Partikel 110 aus ferritischem Stahl (Ferr. Stahl) bei 500°C abhängig vom jeweiligen Durchmesser;
- Graph 2) zeigt den induktiven Wirkungsgrad zylinderförmiger Einsatzelemente 160/Partikel 110 aus ferritischem Stahl (Ferr. Stahl) bei 900°C abhängig vom jeweiligen Durchmesser;
- Graph 3) zeigt den induktiven Wirkungsgrad zylinderförmiger Einsatzelemente 160/Partikel 110 aus Molybdän-Disilizid (MoSi2) bei 1800°C abhängig vom jeweiligen Durchmesser;
- Graph 4) zeigt den induktiven Wirkungsgrad zylinderförmiger Einsatzelemente 160/Partikel 110 aus rekristallisiertem Siliziumcarbid (R-SIC) bei 1000°C abhängig vom jeweiligen Durchmesser; und
- Graph 5) zeigt den induktiven Wirkungsgrad zylinderförmiger Einsatzelemente 160/Partikel 110 aus reaktionsgebundenem Siliziumcarbid (RB-SIC) bei 1200°C abhängig vom jeweiligen Durchmesser.

Aus den Graphen 1) und 2) ist ersichtlich, dass der induktive Wirkungsgrad von Einsatzelementen aus ferritischem Stahl bei 900°C deutlich geringer als der induktive Wirkungsgrad bei 500°C ist.

Im Vergleich dazu ist mit Einsatzelementen 160/Partikeln 110 aus Molybdän-Disilizid (Graph 3)), rekristallisiertem Siliziumcarbid (Graph 4)) und aus reaktionsgebundenem Siliziumcarbid (Graph 5)) auch bei hohen Temperaturen, bei Molybdän-Disilizid sogar bei Temperaturen von 1800°C, ein optimierter induktiver Wirkungsgrad gegeben.

Der induktive Wirkungsgrad von Einsatzelementen 160 und/oder Partikeln 110 aus Molybdän-Disilizid (Graph 3)), aus rekristallisiertem Siliziumcarbid (Graph 4)) und reaktionsgebundenem Siliziumcarbid (Graph 5)) ist bei höheren Temperaturen (von 1000°C oder mehr) höher als der von Einsatzelementen/Partikeln aus ferritischem Stahl bei 900°C (Graph 2)).

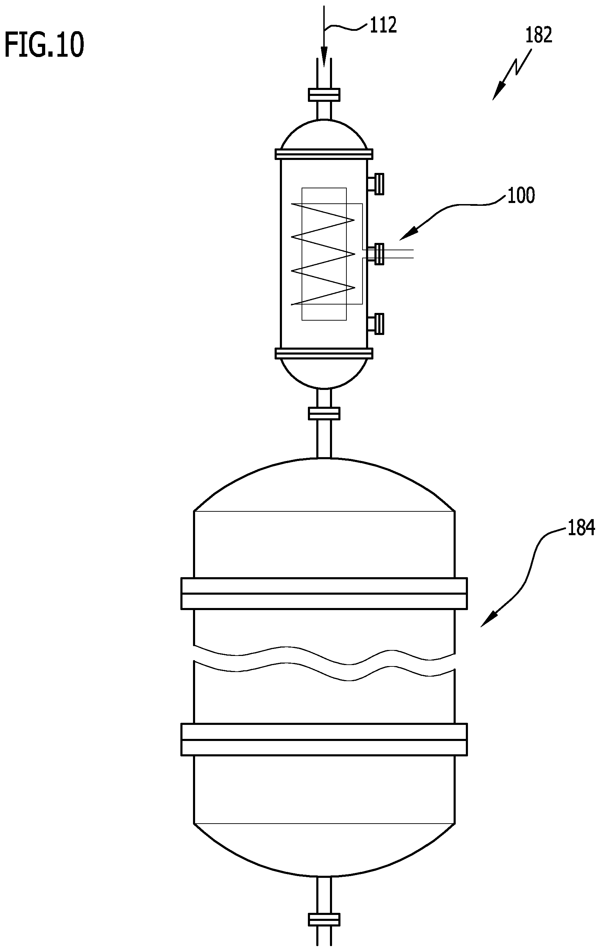

In Fig. 10 ist eine Wärmespeichervorrichtung 100 gemäß einer der zuvor beschriebenen Ausführungsformen in einer Einbausituation in ein Energiespeichersystem 182 gezeigt.

Die Wärmespeichervorrichtung 100 ist in Strömungsrichtung eines Fluid vor einem thermischen Energiespeicher 184 angeordnet und/oder mit diesem in Reihe geschaltet.

Die Wärmespeichervorrichtung 100 dient vorzugsweise einer Vorheizung und/oder Vorerwärmung des Fluids 112.

Die Wärmespeichervorrichtung 100 weist vorzugsweise eine erhöhte Energie- und/oder Leistungsdichte auf und ist insbesondere auch bei hohen Temperaturen von über 900°C flexibel und/oder energieeffizient einsetzbar. Eine Energieeffizienz liegt insbesondere bei mehr als 90%.

### Bezugszeichenliste

- 100: Wärmespeichervorrichtung
- 102: Gehäuse
- 104: Speicherraum
- 106: Speichermaterial
- 108: Induktorvorrichtung
- 110: Partikel
- 112: Fluid
- 114: Fluidführung
- 116: Isolationsschicht
- 118: Gehäusewandung
- 120: Innenseite
- 122: Außenseite
- 124: Induktorelement
- 126: Induktorachse
- 128: Innenseite
- 130: Materialstärke
- 132: Mittelbereich
- 134: Bereich
- 135: Fluideintrittsseite
- 136: Randbereich
- 138: Fluidaustrittsseite
- 140: Induktorrippe
- 142: Außenseite
- 144: Strömungsraum
- 145: Kühlfluidführung
- 146: Außengehäuse
- 148: Kühlfluid
- 150: Isolierung
- 152: Elektrode
- 154: Durchführung
- 156: Kühlfluidzuführung
- 160: Einsatzelement
- 162: Formsteinelement
- 164: erste Stirnseite
- 166: zweite Stirnseite
- 168: Fluiddurchgangsöffnung
- 170: Strömungskanal
- 172: Haupterstreckungsrichtung
- 174: innerer Strömungskanalring
- 176: äußerer Strömungskanalring
- 178: Verbindungswandung
- 180: Wandungselement
- 182: Energiespeichersystem
- 184: thermischer Energiespeicher

- d: Durchmesser
- G: Schwerkraftrichtung

## Patentansprüche

1. Wärmespeichervorrichtung (100), wobei die Wärmespeichervorrichtung (100) Folgendes umfasst:
- einen Speicherraum (104) zur Aufnahme eines Speichermaterials (106);
- eine Induktorvorrichtung (108), welche den Speicherraum (104) umgibt; und
- eine Fluidführung (114) zum Zuführen und/oder Hindurchführen und/oder Abführen von Fluid (112) zu/durch/aus dem Speicherraum (104),
wobei die Induktorvorrichtung (108) ein oder mehrere Induktorelemente (124) umfasst, **dadurch gekennzeichnet, dass** das eine oder die mehreren Induktorelemente (124) in einer parallel zu einer Induktorachse (126) angeordneten Richtung eine variierende Materialstärke (130) aufweisen, wobei die Materialstärke (130) jeweils senkrecht zu der Induktorachse (126) genommen ist, wobei ein Mittelbereich (132) des einen oder der mehreren Induktorelemente (124) eine im Vergleich zu Bereichen (134) des jeweiligen Induktorelements (124), welche zu beiden Seiten des Mittelbereichs (132) angeordnet sind, verringerte Materialstärke (130) aufweist und wobei der Mittelbereich (132) ein Bereich ist, welcher zentral zwischen zwei Randbereichen (136) des jeweiligen Induktorelements (124) angeordnet ist.

2. Wärmespeichervorrichtung (100) nach Anspruch 1, **dadurch gekennzeichnet, dass** die Materialstärke (130) des einen oder der mehreren Induktorelemente (124) von dem Mittelbereich (132) zu den zu beiden Seiten des Mittelbereichs (132) angeordneten Bereichen (134) hin stetig zunimmt und/oder dass die zu beiden Seiten des Mittelbereichs (132) angeordneten Bereiche (134) Randbereiche (136) des einen oder der mehreren Induktorelemente (124) bilden, welche insbesondere an einander gegenüberliegenden Enden des Speicherraums (104) angeordnet sind.

3. Wärmespeichervorrichtung (100) nach Anspruch 1 oder 2, **dadurch gekennzeichnet, dass** sich eine radiale Ausdehnung des einen oder der mehreren Induktorelemente (124) bezüglich der Induktorachse (126) von den zu beiden Seiten des Mittelbereichs (132) angeordneten Bereichen (134) zu dem Mittelbereich (132) hin verjüngt und/oder dass das eine oder die mehreren Induktorelemente (124) jeweils eine Windung einer Spule bilden.

4. Wärmespeichervorrichtung (100) nach einem der Ansprüche 1 bis 3, **dadurch gekennzeichnet, dass** die Wärmespeichervorrichtung (100) ein Gehäuse (102) zur Aufnahme des Speichermaterials (106) umfasst und/oder dass das eine oder die mehreren Induktorelemente (124) an deren Außenseiten (142) bezüglich einer Gehäusewandung (118) des Gehäuses (102) konkav ausgebildet sind.

5. Wärmespeichervorrichtung (100) nach einem der Ansprüche 1 bis 4, **dadurch gekennzeichnet, dass** die Induktorvorrichtung (108) eine oder mehrere Induktorrippen (140) umfasst, welche sich von dem einen oder den mehreren Induktorelementen (124) weg erstrecken und/oder welche eine Kühlfluidführung (145) zur Führung eines Kühlfluids (148) bilden.

6. Wärmespeichervorrichtung (100) nach einem der Ansprüche 1 bis 5, **dadurch gekennzeichnet, dass** eine oder mehrere Induktorrippen (140) der Induktorvorrichtung (108) sich zwischen dem einen oder den mehreren Induktorelementen (124) und einem elektrisch isolierten Außengehäuse (146) der Wärmespeichervorrichtung (100) erstrecken und ein Gehäuse (102) der Wärmespeichervorrichtung (100), welches den Speicherraum (104) umgibt, insbesondere helikal umgeben.

7. Wärmespeichervorrichtung (100) nach einem der Ansprüche 1 bis 6, wobei die Wärmespeichervorrichtung (100) Folgendes umfasst:
- ein Gehäuse (102), welches einen Speicherraum (104) umgibt;
- in dem Speicherraum (104) angeordnetes Speichermaterial (106), welches induktiv erwärmbar ist;
- eine Induktorvorrichtung (108), welche das Gehäuse (102) umgibt;
- eine Fluidführung (114) zum Zuführen und/oder Hindurchführen und/oder Abführen von Fluid (112) zu/durch/aus dem Speicherraum (104),
wobei das Speichermaterial (106) ein keramisches Speichermaterial (106) ist und als Schüttung in dem Speicherraum (104) vorliegt.

8. Wärmespeichervorrichtung (100) nach einem der Ansprüche 1 bis 7, **dadurch gekennzeichnet, dass** die Wärmespeichervorrichtung (100) Speichermaterial (106) umfasst, welches partikelförmig ist, wobei einzelne Partikel (110) des Speichermaterials (106) insbesondere zumindest näherungsweise kugelförmig oder nicht-sphärisch, insbesondere zumindest näherungsweise zylinderförmig oder zumindest näherungsweise torusförmig, ausgebildet sind und/oder einen mittleren Durchmesser (d) von ca. 10 mm bis ca. 200 mm aufweisen.

9. Wärmespeichervorrichtung (100) nach einem der Ansprüche 1 bis 8, **dadurch gekennzeichnet, dass** die Wärmespeichervorrichtung (100) Speichermaterial (106) umfasst, welches Partikel (110) aus einem der folgenden Materialien umfasst oder aus einem der folgenden Materialien gebildet ist: Molybdän-Disilizid, reaktionsgebundenes Siliziumcarbid, reaktionsgeformtes Siliziumcarbid, rekristallisiertes Siliziumcarbid.

10. Wärmespeichervorrichtung (100) nach einem der Ansprüche 1 bis 6, wobei die Wärmespeichervorrichtung (100) Folgendes umfasst:
- ein Gehäuse (102), welches einen Speicherraum (104) umgibt;
- in dem Speicherraum (104) angeordnetes Speichermaterial (106), welches induktiv erwärmbar ist;
- eine Induktorvorrichtung (108), welche das Gehäuse (102) umgibt;
- eine Fluidführung (114) zum Zuführen und/oder Hindurchführen und/oder Abführen von Fluid (112) zu/durch/aus dem Speicherraum (104),
wobei das Speichermaterial (106) in Form mindestens eines Einsatzelements (160), insbesondere in Form mindestens eines Formsteinelements (162), in dem Speicherraum vorliegt, wobei das mindestens eine Einsatzelement (160) ein keramisches Material umfasst oder daraus gebildet ist und eine oder mehrere von dem Fluid (112) durchströmbare Fluiddurchgangsöffnungen (168) aufweist.

11. Wärmespeichervorrichtung (100) nach Anspruch 10, **dadurch gekennzeichnet, dass**
a) die Fluiddurchgangsöffnung (168) oder eine oder mehrere der mehreren Fluiddurchgangsöffnungen (168) des mindestens einen Einsatzelements (160) durch eine offene Porosität des Materials des mindestens einen Einsatzelements (160) gebildet sind; und/oder dass
b) die Fluiddurchgangsöffnung (168) oder eine oder mehrere der mehreren Fluiddurchgangsöffnungen (168) des mindestens einen Einsatzelements (160) durch einen oder mehrere, insbesondere makroskopische und/oder regelmäßig angeordnete, Strömungskanäle (170) in dem mindestens einen Einsatzelement (160) gebildet sind, deren Haupterstreckungsrichtungen (172) zumindest näherungsweise parallel zu einer Induktorachse (126) der Induktorvorrichtung (108) verlaufen.

12. Wärmespeichervorrichtung (100) nach einem der Ansprüche 1 bis 11, **dadurch gekennzeichnet, dass** das Speichermaterial (106) mittels einer Isolationsschicht (116) thermisch und elektrisch von dem einen oder den mehreren Induktorelementen (124) getrennt ist.

13. Wärmespeichervorrichtung (100) nach einem der Ansprüche 1 bis 12, **dadurch gekennzeichnet, dass** das Speichermaterial (106) einen spezifischen elektrischen Widerstand von ca. 10⁻⁴ Ω·cm bis ca. 10⁻¹ Ω·cm aufweist.

14. Wärmespeichervorrichtung (100) nach einem der Ansprüche 1 bis 13, **dadurch gekennzeichnet, dass** das Speichermaterial (106) eines oder mehrere der folgenden Materialien umfasst oder daraus gebildet ist: carbidkeramische Materialien, insbesondere Siliziumcarbid und/oder Titancarbid, silizidkeramische Materialien, insbesondere Molybdän-Disilizid, boridkeramische Materialien, insbesondere Titanborid.

15. Verfahren zum Speichern und/oder Übertragen von Wärme, umfassend:
- Erwärmen eines Speichermaterials (106) durch Anlegen einer Wechselspannung an ein oder mehrere Induktorelemente (124) einer Wärmespeichervorrichtung (100) nach einem der Ansprüche 1 bis 14;
- Entnehmen von Wärme aus dem Speichermaterial (106) durch Zuführen und/oder Hindurchführen und/oder Abführen eines Fluids (112) zu/durch/aus dem Speicherraum (104).

## Claims

1. Heat storage device (100), the heat storage device (100) comprising:
- a storage space (104) for accommodating a storage material (106);
- an inductor device (108) which surrounds the storage space (104); and
- a fluid guide (114) for supplying and/or feeding and/or removing fluid (112) to/through/from the storage space (104),
the inductor device (108) comprising one or more inductor elements (124), **characterized in that** the one or more inductor elements (124) have a varying material thickness (130) in a direction parallel to an inductor axis (126), the material thickness (130) in each case being taken perpendicular to the inductor axis (126), a central region (132) of the one or more inductor elements (124) having a reduced material thickness (130) compared to regions (134) of the relevant inductor element (124) that are arranged on either side of the central region (132), and the central region (132) being a region arranged centrally between two edge regions (136) of the relevant inductor element (124).

2. Heat storage device (100) according to claim 1, **characterized in that** the material thickness (130) of the one or more inductor elements (124) steadily increases from the central region (132) toward the regions (134) arranged on either side of the central region (132), **and/or in that** the regions (134) arranged on either side of the central region (132) form edge regions (136) of the one or more inductor elements (124), which edge regions are in particular arranged at opposite ends of the storage space (104).

3. Heat storage device (100) according to claim 1 or 2, **characterized in that** a radial extension of the one or more inductor elements (124) with respect to the inductor axis (126) tapers from the regions (134) arranged on either side of the central region (132) toward the central region (132), **and/or in that** the one or more inductor elements (124) each form a winding of a coil.

4. Heat storage device (100) according to any of claims 1 to 3, **characterized in that** the heat storage device (100) comprises a housing (102) for accommodating the storage material (106), **and/or in that** the one or more inductor elements (124) are concave on their outer sides (142) with respect to a housing wall (118) of the housing (102).

5. Heat storage device (100) according to any of claims 1 to 4, **characterized in that** the inductor device (108) comprises one or more inductor ribs (140) which extend away from the one or more inductor elements (124) and/or form a cooling fluid guide (145) for guiding a cooling fluid (148).

6. Heat storage device (100) according to any of claims 1 to 5, **characterized in that** one or more inductor ribs (140) of the inductor device (108) extend between the one or more inductor elements (124) and an electrically insulated outer housing (146) of the heat storage device (100), and, in particular helically, surround a housing (102) of the heat storage device (100) which surrounds the storage space (104).

7. Heat storage device (100) according to any of claims 1 to 6, wherein the heat storage device (100) comprises:
- a housing (102) which surrounds a storage space (104);
- storage material (106) arranged in the storage space (104), which storage material can be inductively heated;
- an inductor device (108) which surrounds the housing (102);
- a fluid guide (114) for supplying and/or feeding and/or removing fluid (112) to/through/from the storage space (104),
wherein the storage material (106) is a ceramic storage material (106) and is present in the storage space (104) in the form of bulk material.

8. Heat storage device (100) according to any of claims 1 to 7, **characterized in that** the heat storage device (100) comprises storage material (106) which is particulate, individual particles (110) of the storage material (106) being in particular at least approximately ball-shaped or non-spherical, in particular at least approximately cylindrical or at least approximately toroidal, and/or having an average diameter (d) of approximately 10 mm to approximately 200 mm.

9. Heat storage device (100) according to any of claims 1 to 8, **characterized in that** the heat storage device (100) comprises storage material (106) which comprises particles (110) of one of the following materials or is formed from one of the following materials: molybdenum-disilicide, reaction-bonded silicon carbide, reaction-formed silicon carbide, recrystallized silicon carbide.

10. Heat storage device (100) according to any of claims 1 to 6,
wherein the heat storage device (100) comprises:
- a housing (102) which surrounds a storage space (104);
- storage material (106) arranged in the storage space (104), which storage material can be inductively heated;
- an inductor device (108) which surrounds the housing (102);
- a fluid guide (114) for supplying and/or feeding and/or removing fluid (112) to/through/from the storage space (104),
wherein the storage material (106) is present in the storage space in the form of at least one insert element (160), in particular in the form of at least one shaped block element (162), wherein the at least one insert element (160) comprises or is formed from a ceramic material and has one or more fluid passage openings (168) through which the fluid (112) can flow.

11. Heat storage device (100) according to claim 10, **characterized in that**
a) the fluid passage opening (168) or one or more of the plurality of fluid passage openings (168) of the at least one insert element (160) are formed by an open porosity of the material of the at least one insert element (160); **and/or in that**
b) the fluid passage opening (168) or one or more of the plurality of fluid passage openings (168) of the at least one insert element (160) are formed by one or more, in particular macroscopic and/or regularly arranged flow channels (170) in the at least one insert element (160), the main extension directions (172) of which channels extend at least approximately in parallel with an inductor axis (126) of the inductor device (108).

12. Heat storage device (100) according to any of claims 1 to 11,
**characterized in that** the storage material (106) is thermally and electrically separated from the one or more inductor elements (124) by means of an insulation layer (116).

13. Heat storage device (100) according to any of claims 1 to 12,
**characterized in that** the storage material (106) has a specific electrical resistance of approximately 10⁻⁴ Ω·cm to approximately 10⁻¹ Ω·cm.

14. Heat storage device (100) according to any of claims 1 to 13, **characterized in that** the storage material (106) comprises or is formed from one or more of the following materials: carbide ceramic materials, in particular silicon carbide and/or titanium carbide, silicide ceramic materials, in particular molybdenum disilicide, and boride ceramic materials, in particular titanium boride.

15. Method for storing and/or transferring heat, comprising:
- heating a storage material (106) by applying an AC voltage to one or more inductor elements (124) of a heat storage device (100) according to any of claims 1 to 14;
- removing heat from the storage material (106) by supplying and/or feeding and/or removing a fluid (112) to/through/from the storage space (104).

## Revendications

1. Dispositif accumulateur de chaleur (100), le dispositif accumulateur de chaleur (100) comprenant les éléments suivants :
- un espace d'accumulation (104) permettant de recevoir un matériau d'accumulation (106) ;
- un dispositif d'induction (108) qui entoure l'espace d'accumulation (104) ; et
- un guide de fluide (114) permettant d'acheminer et/ou de faire passer et/ou d'évacuer un fluide (112) vers/à travers/de l'espace d'accumulation (104),
le dispositif d'induction (108) comprenant un ou plusieurs éléments d'induction (124), **caractérisé en ce que** le ou les éléments d'induction (124) présentent, dans une direction disposée parallèlement à un axe d'induction (126), une épaisseur de matériau (130) variable, l'épaisseur de matériau (130) étant mesurée respectivement perpendiculairement à l'axe d'induction (126), une zone centrale (132) du ou des éléments d'induction (124) présentant une épaisseur de matériau (130) réduite par rapport à celle de zones (134) de l'élément d'induction (124) respectif qui sont disposées des deux côtés de la zone centrale (132) et la zone centrale (132) étant une zone qui est disposée au centre entre deux zones de bord (136) de l'élément d'induction (124) respectif.

2. Dispositif accumulateur de chaleur (100) selon la revendication 1,
**caractérisé en ce que** l'épaisseur de matériau (130) du ou des éléments d'induction (124) augmente en continu à partir de la zone centrale (132) vers les zones (134) disposées des deux côtés de la zone centrale (132) et/ou **en ce que** les zones (134) disposées des deux côtés de la zone centrale (132) forment des zones de bord (136) du ou des éléments d'induction (124) qui sont disposées en particulier au niveau d'extrémités opposées l'une à l'autre de l'espace d'accumulation (104).

3. Dispositif accumulateur de chaleur (100) selon la revendication 1 ou 2,
**caractérisé en ce qu'**une extension radiale du ou des éléments d'induction (124) se rétrécit par rapport à l'axe d'induction (126) à partir des zones (134) disposées des deux côtés de la zone centrale (132) vers la zone centrale (132) **et/ou en ce que** le ou les éléments d'induction (124) forment respectivement une spire d'une bobine.

4. Dispositif accumulateur de chaleur (100) selon l'une des revendications 1 à 3, **caractérisé en ce que** le dispositif accumulateur de chaleur (100) comprend un boîtier (102) permettant de recevoir le matériau d'accumulation (106) **et/ou en ce que** le ou les éléments d'induction (124) sont conçus de manière concave au niveau de leurs côtés extérieurs (142) par rapport à une paroi de boîtier (118) du boîtier (102).

5. Dispositif accumulateur de chaleur (100) selon l'une des revendications 1 à 4, **caractérisé en ce que** le dispositif d'induction (108) comprend une ou plusieurs nervures d'induction (140) qui s'étendent à partir du ou des éléments d'induction (124) et/ou qui forment un guide de fluide de refroidissement (145) permettant de guider un fluide de refroidissement (148).

6. Dispositif accumulateur de chaleur (100) selon l'une des revendications 1 à 5, **caractérisé en ce qu'**une ou plusieurs nervures d'induction (140) du dispositif d'induction (108) s'étendent entre le ou les éléments d'induction (124) et un boîtier extérieur (146) électriquement isolé du dispositif accumulateur de chaleur (100) et entourent, en particulier de manière hélicoïdale, un boîtier (102) du dispositif accumulateur de chaleur (100) qui entoure l'espace d'accumulation (104).

7. Dispositif accumulateur de chaleur (100) selon l'une des revendications 1 à 6, le dispositif accumulateur de chaleur (100) comprenant les éléments suivants :
- un boîtier (102) qui entoure un espace d'accumulation (104) ;
- un matériau d'accumulation (106) disposé dans l'espace d'accumulation (104) et pouvant être chauffé par induction ;
- un dispositif d'induction (108) qui entoure le boîtier (102) ;
- un guide de fluide (114) permettant d'acheminer et/ou de faire passer et/ou d'évacuer un fluide (112) vers/à travers/de l'espace d'accumulation (104),
le matériau d'accumulation (106) étant un matériau d'accumulation (106) céramique et se trouvant sous forme de matériau en vrac dans l'espace d'accumulation (104).

8. Dispositif accumulateur de chaleur (100) selon l'une des revendications 1 à 7, **caractérisé en ce que** le dispositif accumulateur de chaleur (100) comprend un matériau d'accumulation (106) qui est particulaire, les particules (110) individuelles du matériau d'accumulation (106) étant conçues en particulier au moins approximativement sous forme sphérique ou non sphérique, en particulier au moins approximativement sous forme cylindrique ou au moins approximativement sous forme torique, et/ou présentant un diamètre moyen (d) d'environ 10 mm à environ 200 mm.

9. Dispositif accumulateur de chaleur (100) selon l'une des revendications 1 à 8, **caractérisé en ce que** le dispositif accumulateur de chaleur (100) comprend un matériau d'accumulation (106) qui comprend des particules (110) en l'un des matériaux suivants ou qui est formé à partir de l'un des matériaux suivants : disiliciure de molybdène, carbure de silicium lié par réaction, carbure de silicium formé par réaction, carbure de silicium recristallisé.

10. Dispositif accumulateur de chaleur (100) selon l'une des revendications 1 à 6, le dispositif accumulateur de chaleur (100) comprenant les éléments suivants :
- un boîtier (102) qui entoure un espace d'accumulation (104) ;
- un matériau d'accumulation (106) disposé dans l'espace d'accumulation (104) et pouvant être chauffé par induction ;
- un dispositif d'induction (108) qui entoure le boîtier (102) ;
- un guide de fluide (114) permettant d'acheminer et/ou de faire passer et/ou d'évacuer un fluide (112) vers/à travers/de l'espace d'accumulation (104),
le matériau d'accumulation (106) se trouvant sous forme d'au moins un élément formant insert (160), en particulier sous forme d'au moins un élément en brique moulée (162), dans l'espace d'accumulation, l'au moins un élément formant insert (160) comprenant un matériau céramique ou étant formé à partir de celui-ci et présentant une ou plusieurs ouvertures de passage de fluide (168) à travers lesquelles peut s'écouler le fluide (112).

11. Dispositif accumulateur de chaleur (100) selon la revendication 10,
**caractérisé en ce que**
a) l'ouverture de passage de fluide (168) ou une ou plusieurs des ouvertures de passage de fluide (168) de l'au moins un élément formant insert (160) sont formées par une porosité ouverte du matériau de l'au moins un élément formant insert (160) ;
**et/ou en ce que**
b) l'ouverture de passage de fluide (168) ou une ou plusieurs des ouvertures de passage de fluide (168) de l'au moins un élément formant insert (160) sont formées par un ou plusieurs canaux d'écoulement (170), en particulier macroscopiques et/ou disposés régulièrement, dans l'au moins un élément formant insert (160), dont les directions d'extension principales (172) s'étendent au moins approximativement parallèlement à un axe d'induction (126) du dispositif d'induction (108).

12. Dispositif accumulateur de chaleur (100) selon l'une des revendications 1 à 11, **caractérisé en ce que** le matériau d'accumulation (106) est séparé thermiquement et électriquement du ou des éléments d'induction (124) au moyen d'une couche d'isolation (116).

13. Dispositif accumulateur de chaleur (100) selon l'une des revendications 1 à 12, **caractérisé en ce que** le matériau d'accumulation (106) présente une résistance électrique spécifique d'environ 10⁻⁴ Ω·cm à environ 10⁻¹ Ω·cm.

14. Dispositif accumulateur de chaleur (100) selon l'une des revendications 1 à 13, **caractérisé en ce que** le matériau d'accumulation (106) comprend un ou plusieurs des matériaux suivants ou est formé à partir de l'un de ceux-ci : matériaux céramiques à base de carbure, en particulier carbure de silicium et/ou carbure de titane, matériaux céramiques à base de siliciure, en particulier disiliciure de molybdène, matériaux céramiques à base de bore, en particulier borure de titane.

15. Procédé permettant d'accumuler et/ou de transmettre de la chaleur, comprenant :
- le chauffage d'un matériau d'accumulation (106) par application d'une tension alternative à un ou plusieurs éléments d'induction (124) d'un dispositif accumulateur de chaleur (100) selon l'une des revendications 1 à 14 ;
- le prélèvement de chaleur à partir du matériau d'accumulation (106) par acheminement et/ou passage et/ou évacuation d'un fluide (112) vers/à travers/de l'espace d'accumulation (104).
